# EUROPEAN PATENT SPECIFICATION

(11) **EP 1 631 635 B1**
(45) Date of publication and mention of the grant of the patent: **02.12.2009**
(21) Application number: 04754238.6
(22) Date of filing: 02.06.2004
(51) Int. Cl.: C09D 11/00

(54) **AQUEOUS IONICALLY STABILIZED DISPERSIONS**
WÄSSRIGE IONISCH STABILISIERTE DISPERSIONEN
DISPERSIONS AQUEUSES STABILISEES SUR LE PLAN IONIQUE

(30) Priority: 06.06.2003 US 476680 P
(43) Date of publication of application: 08.03.2006
(73) Proprietor: E.I. DU PONT DE NEMOURS AND COMPANY, Wilmington, DE 19898 (US)
(72) Inventor: SPINELLI, Harry, Joseph, Wilmington, DE 19802 (US)
(74) Representative: Morf, Jan Stefan
(86) International application number: PCT/US2004/017586
(87) International publication number: WO 2004/111140

(56) References cited:
- EP-A- 0 556 649
- US-A- 5 085 698
- US-A- 5 708 095
- US-A1- 2002 035 173
- US-B1- 6 232 369
- MINORU USUI ET AL.: "The development of pigment ink for plain paper" 2002, IS&T'S NIP18: INTERNATIONAL CONFERENCE ON DIGITIAL PRINTING TECHNOLOGIES , SAN DIEGO, CA , XP009036620 cited in the application the whole document

## Description

### BACKGROUND OF THE INVENTION

This invention relates to novel, stable aqueous pigment dispersions, the polymeric dispersants that produce the stable aqueous pigment dispersions, the process of making the pigment dispersions and the use thereof in ink jet inks.

Aqueous dispersions of pigments are known in the art and have been used in various applications such as, for example, inks for printing (particularly ink jet printing); waterborne paints and other coating formulations for vehicles, buildings, road markings and the like; cosmetics; pharmaceutical preparations; etc. Because pigments are typically not soluble in an aqueous vehicle, it is often required to use dispersing agents, such as polymeric dispersants or surfactants, to produce a stable dispersion of the pigment in the vehicle.

An application of the present invention relates to an ink (printing liquid) useful for writing utensils such as aqueous ball point pens, fountain pens and felt-tip pens; continuous and on-demand type inkjet printers of a thermal jet type, a piezo type and the like; and an inkjet printing method employing the ink.

Aqueous pigment dispersions generally are stabilized by either a non-ionic or ionic technique. When the non-ionic technique is used, a polymer having a non-ionic hydrophilic section that extends into the water medium is typically employed. The hydrophilic section provides entropic or steric stabilization that stabilizes the pigment particles in the aqueous vehicle. Polyvinyl alcohol, cellulosics, ethylene oxide modified phenols and ethylene oxide/propylene oxide polymers may be used for this purpose.

While the non-ionic technique is not sensitive to pH changes or ionic contamination, it has a major disadvantage in that the printed image is water sensitive.

In the ionic technique, the pigment particles are stabilized using the polymer of an ion containing monomer, such as neutralized acrylic, maleic or vinyl sulfonic acid. The polymer provides stabilization through a charged double layer mechanism whereby ionic repulsion hinders the particles from flocculation. Since the neutralizing component tends to evaporate after printing, the polymer then has reduced water solubility and the printed image is not water sensitive.

There continues to be a need for higher-quality and different property inks for inkjet ink applications. For instance, photographic and other highly colored printing requires improved inkjet inks. Although improvements in polymeric dispersants have significantly contributed to improved inkjet inks, the current dispersants still do not provide inks with requisite optical density and chroma needed for emerging ink jet applications.

A variety of dispersants having random and structured (e.g. block and graft) polymeric structures have been proposed in the art. For example, US4597794 discloses aqueous ink dispersions wherein the pigment particles are dispersed using a polymer having ionic hydrophilic segments and aromatic hydrophobic segments that adhere to the pigment surfaces. US5085698 discloses use of AB and BAB block polymer dispersants, which are used in commercial inks for thermal ink jet printers. JP-A-07276806 discloses using certain graft copolymers having a hydrophilic portion containing acid groups and a hydrophobic portion primarily composed of styrenes and alkyl esters of (meth)acrylic acid.

While random polymeric dispersants, such as those proposed in US4597794, can be prepared readily using conventional polymerization techniques, structured polymeric dispersants such as those taught in US5085698 usually provide better dispersion stability. The structured polymers, however, are more difficult to manufacture and require raw materials having a high purity. The graft copolymers proposed in JP-A-07276806 are prepared in an elaborate multi-step process generally requiring purification steps before the macro-monomers can be used in the synthesis of the final graft copolymer.

Each of these dispersant types can be classified as conventional dispersants. That is, they act to stabilize a pigment particle in an aqueous system, but do not form permanent bonds to the pigment surface, nor are steps taken to create an encapsulated pigment particle or to force the dispersant to encapsulate the pigment particle.

There are reports that encapsulation of pigment particles provide a means to produce improved inks. For instance, JP-A-09151342 describes dispersions from anionic microencapsulated pigment dispersions. The microencapsulated pigments are said to be obtained by forcing polymeric dispersants to encapsulate the pigment by salting out the dispersant or by a phase inversion process, or by using a crosslinking component. In Synthesis Example 3, a polymer is produced via a free radical process in which the polymer has about 6 mole percent ionic content from methacrylic acid. In the subsequent microencapsulating step and dispersion preparation step using this polymer, an unstable dispersant is produced. The resulting pigment dispersion had large particle sizes, with an average size of 617 nm.

In US6511534 there is described an improved encapsulation method which is limited to self-dispersed pigments, and that the encapsulated coloring material contains the organic polymer at a content ranging from 1 to 20% by weight based on the coloring material.

Alternate ways to produce stable pigment dispersions include modifying the pigment to make it a self-dispersing pigment. This self-dispersion characteristic is a result of a modification of the pigment surface. Thus, the dispersing functionality (such as carboxylate groups) is covalently bonded to the pigment resulting in a self-dispersing modification. Examples of these self-dispersing pigment systems are described in US5718746, US6524383, US5554739 and W001094476.

Recently described strategies in US6440203 purport to achieve higher optical density and chroma by producing an ink which has both a self-dispersing pigment and a colorant with a dispersant.

Also, US6262152 discloses using conditions which result in encapsulating the pigment particle via *in situ* reactions which crosslink the dispersants at, near or onto the pigment particle surface.

In US2003/0078320, an ink set is described which consists of a seif-dispersed black ink and a "colorant enclosing a color pigment with a polymer". The enclosing is defined as "completely enclosing a color pigment with a polymer". This enclosure is achieved by polymerization with the colorant present, use of crosslinking agents and other processes.

While aqueous dispersions based on these systems have provided improved ink jet inks for many aspects of ink jet printing, still there are opportunities to improve the dispersions. One particularly important opportunity is obtaining improved optical density and chroma. This must be achieved while maintaining other aspects of pigmented dispersions, such as dispersion stability, long nozzle life and the like.

### SUMMARY OF THE INVENTION

The use of polymeric conventional dispersants is well establishes as a means to make stable dispersants of particles, especially pigment particles. In general, these conventional dispersants have, at least, modest water solubility and this water solubility is used as a guide to predicting dispersion stability. During diligent searching for new, improved polymeric dispersants, a new class of dispersants has been found that has little water solubility or miscibility, and very limited hydrophilic content, and can be used to produce stable aqueous dispersions with new and improved properties.

In accordance with the invention, a new class of dispersants has been found that produce stable aqueous dispersions via ionic stabilization with substantially no steric stabilization. When these dispersions are utilized for ink jet inks, images printed with the ink display both improved optical density and chroma.

Dispersions containing this new class of dispersants are referred to herein as ionically stabilized dispersions (ISD's). The dispersants themselves are referred to as ISD polymer dispersants.

Accordingly, there are provided dispersants that lead to stable aqueous dispersions (ISD polymer dispersants), stable aqueous dispersions containing these dispersants (ISD's), methods of making ISD's, inks based on ISD's, inks sets comprising at least one ink based on an ISD, and methods of ink jet printing that use the inks and ink sets based on ISD's.

In accordance with the present invention, there is provided an aqueous pigment dispersion comprising a pigment and a polymeric, ionic dispersant in an aqueous vehicle, wherein:
(a) the ionic dispersant is physically adsorbed to the pigment,
(b) the polymeric ionic dispersant stably disperses the pigment in the aqueous vehicle,
(c) the average particle size of the dispersion is less than 300 nm, and
(d) when the aqueous pigment dispersion is added to 1.5 g of an aqueous NaCl solution of 0.16 molar salt, in an amount of
   (i) one drop for pigment dispersions of more than 10 wt% solids (based upon the total weight of the dispersion),
   (ii) two drops for pigment dispersions of 5-10 wt% solids (based upon the total weight of the dispersion), and
   (iii) three drops for pigment dispersions of less than 5 wt% solids (based upon the total weight of the dispersion),
wherein one drop is 0.04 g,
the pigment precipitates out of the aqueous NaCl salt solution when observed 24 hours after the addition.

In accordance with a preferred aspect of the present invention, the polymeric ionic dispersant stably disperses the pigment in the aqueous vehicle via ionic stabilization with substantially no steric stabilization.

In accordance with another aspect of the present invention, there is provided an aqueous ink jet ink comprising the aqueous pigment dispersion of the invention.

In accordance with another aspect of the present invention, there is provided an aqueous pigmented ink jet ink comprising an aqueous pigment dispersion as described above, having from about 0.1 to about 10 wt% pigment based on the total weight of the ink, a weight ratio of pigment to dispersant of from about 0.5 to about 6, a surface tension in the range of 20 mN/m to 70 mN/m (20 dyne/cm to 70 dyne/cm) at 25°C, and a viscosity of lower than 30 mPa·s (30 cP) at 25°C.

In accordance with another aspect of the present invention, there is provided a method for making an aqueous pigment dispersion as set forth above, comprising the step of mixing the pigment and the ionic polymeric dispersant in an aqueous carrier medium, then dispersing and/or deflocculating the pigment. Preferably, the dispersing and/or deflocculating is accomplished in a process selected from the group consisting of 2-roll milling, media milling, and by passing the mixture through a plurality of nozzles within a liquid jet interaction chamber at a liquid pressure of at least 344.74 bar (5,000 psi).

In still another aspect of the present invention, there is provided an ink set comprising at least one cyan ink, at least one magenta ink and at least one yellow ink,
wherein at least one of the inks is an aqueous pigmented ink jet ink as set forth above and described in further detail below.

In yet another aspect of the present invention, there is provided a method for ink jet printing onto a substrate, comprising the steps of:
(a) providing an ink jet printer that is responsive to digital data signals;
(b) loading the printer with a substrate to be printed;
(c) loading the printer with an ink as set forth above and described in further detail below, or an ink jet ink set as set forth above and described in further detail below; and
(d) printing onto the substrate using the ink or inkjet ink set in response to the digital data signals.

In yet another aspect of the present invention polymeric additives can be added to inks containing ISD's to enhance the ink performance.

These and other features and advantages of the present invention will be more readily understood by those of ordinary skill in the art from a reading of the following detailed description. It is to be appreciated that certain features of the invention which are, for clarity, described above and below in the context of separate embodiments, may also be provided in combination in a single embodiment. Conversely, various features of the invention that are, for brevity, described in the context of a single embodiment, may also be provided separately or in any subcombination. In addition, references in the singular may also include the plural (for example, "a" and "an" may refer to one, or one or more) unless the context specifically states otherwise.

### DETAILED DESCRIPTION OF THE PREFERRED EMBODIMENTS

The science and art of producing stable dispersions utilizing organic polymeric dispersants has been studied and extensively developed. In this literature the types of dispersants are characterized based on the perceived mechanism(s) of stabilization. Thus, polymeric dispersions can stabilize dispersions by steric and electrostatic stabilization. In order to provide effective steric or electrosteric stabilization, the dispersant must adhere to the particle surface and have an interaction with the dispersion medium. Both requirements can be satisfied, by a polymeric dispersant with a dual functionality, featuring one or more functional groups or segments that attach or interact with the particle surfaces, and segments or tails that extend into the dispersion medium and provide the barrier needed for stabilization. In fact, the optimization of the dual functionality has lead to many improved pigment dispersions. This dual functionality is achieved by utilizing polymers with hydrophilic and hydrophobic segments.

Alternatively the polymeric dispersant can stabilize the pigment by an ionic mechanism. That is, the described polymeric dispersant systems suggest that the stabilization mechanism comes from the polymer providing stabilization through a charged double layer mechanism whereby ionic repulsion hinders the particles from flocculating (see US5085698).

Although polymeric dispersants are most often described as leading to stabilization via steric, electrosteric or ionic mechanisms, in fact it appears that most if not all current polymeric dispersant systems stabilize by combinations of both mechanisms. Those stabilizations that are described solely in the context of a single mechanism are now believed to be combinations of steric and ionic mechanisms.

In the context of the present invention, it has now been recognized that polymeric dispersants that function with virtually no steric stabilization can still successfully stabilize a dispersion.

Thus, polymers were sought that had a new balance of properties. The hydrophobic nature of the polymers is important in that it can attach to the pigment surface, most likely by van der Waals and similar non-bonding forces (physical adsorption to the pigment). The major difference between the instant invention and the previously described systems is that, in accordance with the present invention, the hydrophilic portion of the polymer is significantly reduced. Furthermore, the hydrophobic/hydrophilic segments of the polymers are distributed in the polymer to minimize large molecular regions of hydrophilic components. These high densities of hydrophilic groups can lead to undesirable steric stabilization.

This new balance in properties results in aqueous pigment dispersions where the polymeric stabilization is almost solely due to ionic stabilization, with little or no steric stabilization. While there are spectroscopic means to determine the presence of steric stabilization as described in "Powders, Handling, Dispersion of Powders in Liquids", Kirk-Othmer Encyclopedia of Chemical Technology, John Wiley and Sons (2003), a more routine method has been developed to characterize the aqueous pigment ISD's in accordance with the present invention that utilize the ISD polymeric dispersants. This method is called the salt stability test.

### Salt Stability Test

A series of different concentration aqueous NaCl salt solutions are prepared. For each salt solution, approximately 1.5 ml (1.5 g) is added to a small glass vial.

For a pigment dispersion "concentrate", one drop is added to the salt solution and gently mixed. For a pigment dispersion concentrate of about 15 wt% total solids (typical), one drop would typically be 0.04 g total. The test for inks (which can be considered diluted forms of the concentrates) is very similar for the salt stability test for pigment dispersion concentrates, except that the solids content of inks is lower than that of a pigment dispersion concentrate, so the volume of ink added to the salt solution needs to be increased to maintain the same approximate amount of solids. Based on a typical ink of about 5 wt% total solids, about three times the weight of ink (as compared to concentrate) is needed.

Taking the case of the pigment dispersion concentrate mentioned above, the weight of solids from the concentrate would be about 0.006 g in about 1.5 g of the aqueous salt test solution, or about 0.4% by weight based on the weight of the aqueous salt test solution.

It should be noted that the 0.4% by weight number derived above is not critical for the application of the salt stability test, but can be used as a standard point if so desired. Because the results of the salt stability test are more related to the concentration of salt as compared to solids, and because it may be somewhat difficult to precisely determine the solids content of a pigment dispersion, for a standard of measurement the following convention will be adopted:
(i) one drop for pigment dispersions of more than 10 wt% solids (based upon the total weight of the dispersion),
(ii) two drops for pigment dispersions of 5-10 wt% solids (based upon the total weight of the dispersion), and
(iii) three drops for pigment dispersions of less than 5 wt% solids (based upon the total weight of the dispersion),
wherein one drop is 0.04 g,

Based on the above, the appropriate amount of the pigment dispersion is added to the salt solution and gently mixed. After sitting undisturbed for 24 hours at room temperature, sample stability is rated as follows:
- Rating of 3: complete settling of pigment; transparent, uncolored liquid at top.
- Rating of 2: no transparent uncolored liquid layer; definite settling onto bottom of vial observed when vial is tilted.
- Rating of 1: no transparent uncolored liquid layer; very slight settling (small isolated spots) as observed during tilting of vial.
- Rating of 0: no evidence of any settling.

The salt concentration where settling is definitely observed (a rating of 2 or 3) is taken as the critical flocculation concentration for the pigment dispersion. It can be inferred from this test that, with increasing critical flocculation concentration, the role of polymeric (steric) stabilization becomes more dominant and electrostatic stabilization becomes a less important stabilization mechanism.

The ISD polymer dispersants which satisfy the requirements for the invention are those that give pigment dispersions that are rated at 2 or 3 at a concentration of salt of 0.16 molar. That is, ISD polymer dispersants of this invention, when associated with a pigment in an ISD, and when tested by the salt stability test, will be observed to precipitate from the test solution at 0.16 molar salt concentration. Rating criteria 2 and 3 will each meet the criteria of precipitation. Preferred are pigment dispersions that are rated at 2 or 3 at a concentration of salt of 0.14 or lower.

The salts for the aqueous salt solution are sodium salts.

As indicated above, and for further clarification, the salt stability test is applicable to a wide variety of pigment dispersion solids contents. If, however, too much or too little solids are used in the test, it may be difficult to evaluate the samples in the context of the ratings above. While the one, two or three drop definition for the test does not specifically define an amount of solids added, the test is quite flexible and it has been found that these generalities are sufficient to effectively rate samples in a consistent manner. In other words, the test as defined above provides consistent and meaningful results despite variations in the solids contents of the dispersions tested, and has been thus adopted as a definition in the context of the present invention. Further details and actual application of the salt stability test (which particularly demonstrate this consistency of results) are provided in the Examples section below.

A large class of dispersed pigments that will likely pass this test are those pigments that have been processed to be self-dispersing pigments (SDP's). However, SDP's do not meet the criteria of the instant invention in that no polymeric dispersant is included in the system. A test of an ink or dispersion to determine the presence of an SDP is as follows:
(a) Acidify the ink (or dispersion) by adding HCl. This converts the water solubilizing components on the SDP and dispersant, like COO⁻, SO₃⁻, or phosphonate, to their acidified form, thus lowering the solubility of the pigment and the dispersants in the aqueous media. Water-miscible cosolvent and surfactants should be dissolved into the aqueous phase by this step. Isolate the resulting solid. Alternatively, for a cationic-based ink, ammonia could be added to basify the cationic stabilizing group.
(b) Extract the resulting solid with tetrahydrofuran (THF). This removes binders and dispersants from the isolated solid, leaving a pigment substantially free of polymers. Encapsulants that are bound to the pigment may remain on the pigment.
(c) Dry the resulting solid.
(d) Redisperse the pigment with water and adjust the pH to about 9.
   (i) If the pigment redisperses into solution, then the pigment is an SDP where the dispersing moiety is covalently bound to the pigment particle.
   (ii) If pigment does not redisperse and remains undissolved, then it is not an SDP but a Conventional pigment, which had been converted to a stable dispersion by the polymeric components that were removed in step (b).
(e) Dry the resulting solid.

In the case where the pigment is a mixture of SDP and conventional pigments with dispersants, such as described in US6440203, the pigment left at step (e) would likely be the conventional pigment and the difference between the mass at step (c) and (e) would be the SDP that made up the pigment mixture.

The ISD polymer dispersants of the invention have dual functionality. The predominant portion is hydrophobic which has attractive forces to the pigment surface. The hydrophilic portion is limited such that the resultant pigment dispersant has little or no steric stabilization, and the resultant pigment/ISD polymer dispersant precipitates when tested by the salt stability test at 0.16 molar salt solution.

The ISD polymer dispersants are prepared by polymerization of hydrophobic and hydrophilic monomers. There is no limit as to the means to polymerize these monomers, except that the final polymer, when tested as the polymeric dispersant with pigment, leads to a dispersion in which the resultant pigment/ISD polymer dispersant precipitates when tested by the salt stability test at 0.16 molar salt solution.

The ISD polymer dispersant may be a random, linear copolymer, or a structured polymer such as a diblock (A-B) or triblock (A-B-A or B-A-B) polymer, or a graft or branched polymer. The polymer can be made by any number of well-known polymerization processes, including free radical, ionic, group transfer (GTP), radical addition fragmention (RAFT), and atom transfer reaction (ATR). General conditions and examples of such polymerization processes are disclosed in many of the previously incorporated references.

The polymer dispersant is a copolymer of hydrophobic and hydrophilic monomers. The precursor monomers can be denoted as follows, wherein A represents monomers for the hydrophobic segment, B represents monomers for the hydrophilic segment, X denotes a hydrophobic substituent on the A monomer, and Z denotes a hydrophilic substituent on the B monomer. One type of more than one type of monomer may be present in each segment.

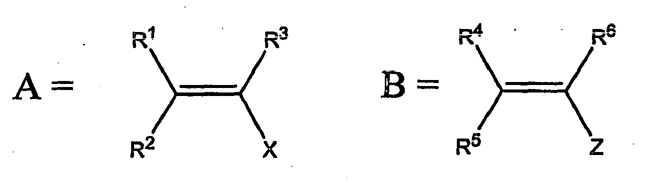

For A and B, preferred examples of structures that would result in ISD dispersants are those wherein each of R¹-R⁶ are independently selected from the group consisting of H and an alkyl, aryl or alkylaryl group having 1-20 carbons, and wherein X and Z are described below. In one preferred embodiment, each of R¹-R⁶ is selected from the group consisting of H and CH₃. In another preferred embodiment, each of R¹-R² and R⁴-R⁵ is H, and each of R³ and R⁶ is independently selected from H and CH₃.

The hydrophilic composition of ISD polymer dispersants is minimized relative to known polymeric dispersants as described in many of the previously mentioned references. The hydrophilicity of the ISD polymer dispersants is derived from the ionic substituent (Z) on the monomer B.

The Z group can be anionic, cationic, amphoteric or zwitterionic, hydrophilic components. Nonionic components can also be included in the polymeric dispersant as long as their inclusion does not lead to sufficient steric stabilization so that the polymeric dispersant with pigment does not meet the criteria set forth by the salt test. In the case of a polymer with non-ionic components, the salt test provides the means to determine what hydrophobic/hydrophilic/nonionic balance is required to obtain a 'failed' salt test at or below an ion concentration of 0.16 molar. Examples of the Z group include:
- anionic, e.g., sulfonates, sulfates, sulfosuccinates, carboxylates, phosphates
- cationic, e.g., amine salts, including quaternary amine salts.
- amphoteric, e.g., N -> O
- zwitterionic, e.g., betaines, +N-C-CO₂-, lecithins.

The hydrophilic monomers may have single Z substituents or combinations of Z groups. The Z group is present as its hydrogen substituted form or as a salt.

Hydrophilic monomers include methacrylic acid, acrylic acid, maleic acid, maleic acid monoester, itaconic acid, itaconic acid monoester, crotonic acid, crotonic acid monoester, N,N-dimethylaminoethyl methacrylate, N,N-diethylaminoethyl methacrylate, N,N-dimethylaminoethyl acrylate, N,N-diethylaminoethyl acrylate, t-butylaminoethyl methacrylate, t-butylaminoethyl acrylate, vinyl pyrridine, N-vinyl pyrridine, 2-acrylamido-2-propane sulfonic acid, ethoxy triethyleneglycol methacrylate, hydroxyethyl methacrylate, hydroxypropyl methacrylate, 2-ethoxyethyl methacrylate, hydroxyethyl acrylate, and hydroxypropyl acrylate.

The hydrophobic composition of ISD polymer dispersants is maximized relative to known polymeric dispersants as described in many of the previously incorporated references. The hydrophobicity of the ISD polymer dispersants is derived from the hydrophobic substituent (X) on the monomer A.

In a preferred embodiment, X is selected from the group consisting of:
(a) an alkyl, aryl and alkylaryl group containing 1-20 carbon atoms, which group may further contain one or more heteroatoms,
(b) a group of the formula C(O)OR⁷, wherein R⁷ is selected from the group consisting of an alkyl, aryl and alkylaryl group containing 1-20 carbon atoms, which group may further contain one or more heteroatoms, and
(c) a group of the formula C(O)NR⁸R⁹, wherein each of R⁸ and R⁹ is independently selected from the group consisting of H and an alkyl, aryl and alkylaryl group containing 1-20 carbon atoms, which group may further contain one or more heteroatoms.

Hydrophobic monomers include benzyl methacrylate, butyl methacrylate, methyl methacrylate, ethyl methacrylate, propyl methacrylate, hexyl methacrylate, 2-ethylhexyl methacrylate, octyl methacrylate, lauryl ethacrylate, stearyl methacrylate, phenyl methacrylate, phenoxyethyl methacrylate, methacrylonitrile, glycidyl methacrylate, p-tolyl methacrylate, sorbyl methacrylate, methyl acrylate, ethyl acrylate, propyl acrylate, butyl acrylate, hexyl acrylate, 2-ethylhexyl acrylate, octyl acrylate, lauryl acrylate, stearyl acrylate, phenyl acrylate, phenoxyethyl acrylate, acrylonitrile, glycidyl acrylate, p-tolyl acrylate, sorbyl acrylate, styrene, alphamethyl styrene, substituted styrenes, N-alkyl acrylamides, N-alkyl methacrylamides, vinyl acetate, vinyl butyrate and vinyl benzoate.

A preferred example of an A (hydrophobic) is an acrylic monomer, wherein X is selected from the group consisting of C(O)OR⁷, C(O)NR⁸ R⁹ and CN. In one preferred embodiment, R⁷ is selected from the group consisting of an alkyl, aryl and alkylaryl group having 1 to 20 carbon atoms, which group may further contain one or more heteroatoms; and R⁸ and R⁹ are independently selected from the group consisting of H and an alkyl, aryl or alkylaryl group having 1 to 9 carbon atoms. Polymer segment of A monomers preferably have a number average molecular weight of at least 300, and are water insoluble.

This list is not limiting in that any polymeric system which produces an ISD polymer dispersant (that is, which produces an ISD that satisfies the salt stability test) will satisfy the polymeric needs of the invention.

There are no limitations as to the polymerization methodology to combine monomers A and B to prepare the ISD polymeric dispersant. Examples of polymerization methods include but are not limited to free radical processes, or Group Transfer Processes (GTP).

ISD polymer dispersants preferred for use in the context of the present invention have a number average molecular weight greater than 300, preferably greater than 800, and below 3,000, preferably below 20,000, and typically in the range of 1,000 to 6,000.

ISD polymeric dispersants are limited to the amount of ionic content. For random, linear copolymer, diblock, graft and branched polymers, the limit of hydrophilic monomers is from 1 mole percent to less than 20 mole percent, based on all of the monomers wherein the hydrophilic monomers and the ydrophobic monomers are as described in claim 2. Alternatively, the limit of hydrophilic monomers is from 2 mole percent to less than 15 mole percent based on all of the monomers. For ABA triblocks, the limit is from 2 mole percent to less than 38 mole percent and, alternatively, less than about 25 mole percent. For BAB, triblocks the limit is from 2 mole percent to less than 25 mole percent. For each of these ionic limitations, the salt stability test of the pigment dispersion or ink jet ink is the determining factor relative to ionic content.

One of the results of the low hydrophilic content of the ISD polymeric dispersants is that their solubility in water is low. Water, of course, is a preferred media for inkjet inks. Thus, in order to prepare a stable aqueous dispersions from the ISD polymer dispersants, the initial mixture of the pigment and the ISD polymer dispersants preferably includes a water-miscible solvent, which sufficiently solubilizes the ISD polymer dispersant so that an initial physical mixture of the dispersant and pigment can be obtained. Then this ISD polymeric dispersant, pigment and solvent mixture can be processed by conventional dispersion processing to form a stable ISD polymeric dispersant/pigment combination in an aqueous vehicle. This aqueous vehicle can thus be a combination of water and a water-miscible solvent. Candidate solvent systems can be determined by studying the solubility of the ISD polymeric dispersant by using well-known solubility parameter methodologies.

The ISD's and ink compositions of the invention may be prepared by methods known in the art. It is generally desirable to make the ISD in a concentrated form, which is subsequently diluted with a suitable liquid containing the desired additives. The ISD is first prepared by premixing the selected pigment(s) and ISD polymeric dispersant(s) in an aqueous carrier medium (such as water and, optionally, a water-miscible solvent), and then dispersing or deflocculating the pigment. The dispersing step may be accomplished in a 2-roll mill, media mill, a horizontal mini mill, a ball mill, an attritor, or by passing the mixture through a plurality of nozzles within a liquid jet interaction chamber at a liquid pressure of at least 344.74 bar (5,000 psi) to produce a uniform dispersion of the pigment particles in the aqueous carrier medium (microfluidizer). Alternatively, the concentrates may be prepared by dry milling the polymeric dispersant and the pigment under pressure. The media for the media mill is chosen from commonly available media, including zirconia, YTZ, and nylon. These various dispersion processes are in a general sense well-known in the art, as exemplified by, US5022592, US5026427, US5310778, US5891231, US5679138, US5976232 and US20030089277. Preferred are 2-roll mill, media mill, and by passing the mixture through a plurality of nozzles within a liquid jet interaction chamber at a liquid pressure of at least 344.74 bar (5,000 psi).

After the milling process is complete the pigment concentrate may be "let down" into an aqueous system. "Let down" refers to the dilution of the concentrate with mixing or dispersing, the intensity of the mixing/dispersing normally being determined by trial and error using routine methodology, and often being dependent on the combination of the polymeric dispersant, solvent and pigment. The determination of sufficient let down conditions is needed for all combinations of the polymeric dispersant, the solvent and the pigment.

After the ISD preparation, the amount of water-miscible solvent may be more than some ink jet applications will tolerate. For some of the ISDs, it thus may be necessary to ultrafilter the final dispersion to reduce the amount of water-miscible solvent. To improve stability and reduce the viscosity of the pigment dispersion, it may be heat treated by heating from 30°C to 100°C, with the preferred temperature being 70°C for 10 to 24 hours. Longer heating does not affect the performance of the dispersion.

The amount of polymeric ISD dispersants required to stabilize the pigment is dependent upon the specific ISD dispersants, the pigment and vehicle interaction. The weight ratio of pigment to polymeric ISD dispersants will typically range from 0.5 to 6. A preferred range is 0.75 to 4.

While not being bound by theory, it is believed that the ISD's provide improved ink properties by the following means. Stable aqueous dispersions are critical for inkjet inks to assure long-lived ink cartridges and few problems with failed nozzles, etc. It is, however, desirable for the ink to become unstable as it is jetted onto the media so that the pigment in the ink "crashes out" onto the surface of the media (as opposed to being absorbed into the media). With the pigment on the surface of the media, beneficial properties of the ink can be obtained.

The ISD polymeric dispersants provide novel dispersants that sufficiently stabilize the ink prior to jetting (such as in the cartridge) but, as the ink is jetted onto the paper, the pigment system is destabilized and the pigment remains on the surface of the media. This leads to improved ink properties.

The hydrophobic nature of the inkjet inks made with ISD's improves optical density and chroma significantly. A recent discussion of pigmented ink in IS&T's NIP 18:2002 International Conference on Digital Printing Technologies, page 369, describes a hydrophobic pigment formulation that, when jetted onto a plain paper, results in the pigment residing on the paper surface. This surface deposit of pigment results in better optical density and chroma. The ISD's of this invention take the hydrophobicity to an even greater level to achieve even better optical density and chroma.

### Pigments

A wide variety of organic and inorganic pigments, alone or in combination, may be selected to make the ISDs and ink. The term "pigment" as used herein means an insoluble colorant. The pigment particles are sufficiently small to permit free flow of the ink through the ink jet printing device, especially at the ejecting nozzles that usually have a diameter ranging from 10 micron to 50 micron. The particle size also has an influence on the pigment dispersion stability, which is critical throughout the life of the ink. Brownian motion of minute particles will help prevent the particles from flocculation. It is also desirable to use small particles for maximum color strength and gloss. The range of useful particle size is typically 0.005 micron to 15 micron. Preferably, the pigment particle size should range from 0.005 to 5 micron and, most preferably, from 0.005 to 1 micron. The average particle size as measured by dynamic light scattering is less than 500 nm, preferably less than 300 nm.

The selected pigment(s) may be used in dry or wet form. For example, pigments are usually manufactured in aqueous media and the resulting pigment is obtained as water-wet presscake. In presscake form, the pigment is not agglomerated to the extent that it is in dry form. Thus, pigments in water-wet presscake form do not require as much deflocculation in the process of preparing the inks as pigments in dry form. Representative commercial dry pigments are listed in US5085698.

In the case of organic pigments, the ink may contain up to approximately 30%, preferably 0.1 to 25%, and more preferably 0.25 to 10%, pigment by weight based on the total ink weight. If an inorganic pigment is selected, the ink will tend to contain higher weight percentages of pigment than with comparable inks employing organic pigment, and may be as high as 75% in some cases, since inorganic pigments generally have higher specific gravities than organic pigments.

The ISD polymer dispersant is preferably present in the range of 0.1 to 20%, more preferably in the range of 0.2 to 10 %, and still more preferably in the range of 0.25% to 5%, by weight based on the weight of the total ink composition.

### Aqueous Carrier Medium

The aqueous carrier medium (aqueous vehicle) is water or a mixture of water and at least one water-miscible organic solvent. Selection of a suitable mixture depends on requirements of the specific application, such as desired surface tension and viscosity, the selected pigment, drying time of the pigmented ink jet ink, and the type of paper onto which the ink will be printed. Representative examples of water-soluble organic solvents that may be selected include (1) alcohols, such as methyl alcohol, ethyl alcohol, n-propyl alcohol, iso-propyl alcohol, n-butyl alcohol, sec- butyl alcohol, t-butyl alcohol, iso-butyl alcohol, furfuryl alcohol, and tetrahydrofurfuryl alcohol; (2) ketones or ketoalcohols such as acetone, methyl ethyl ketone and diacetone alcohol; (3) ethers, such as tetrahydrofuran and dioxane; (4) esters, such as ethyl acetate, ethyl lactate, ethylene carbonate and propylene carbonate; (5) polyhydric alcohols, such as ethylene glycol, diethylene glycol, triethylene glycol, propylene glycol, tetraethylene glycol, polyethylene glycol, glycerol, 2-methyl-2,4-pentanediol 1,2,6-hexanetriol and thiodiglycol; (6) lower alkyl mono- or di-ethers derived from alkylene glycols, such as ethylene glycol monomethyl (or -ethyl) ether, diethylene glycol mono-methyl (or - ethyl) ether, propylene glycol mono-methyl (or -ethyl) ether, triethylene glycol mono-methyl (or -ethyl) ether and diethylene glycol di-methyl (or -ethyl) ether; (7) nitrogen containing cyclic compounds, such as pyrrolidone, N-methyl-2-pyrrolidone, and 1,3-dimethyl-2- imidazolidinone; and (8) sulfur-containing compounds such as dimethyl sulfoxide and tetramethylene sulfone.

A mixture of water and a polyhydric alcohol, such as diethylene glycol, is preferred as the aqueous carrier medium. In the case of a mixture of water and diethylene glycol, the aqueous carrier medium usually contains from 30% water/70% diethylene glycol to 95% water/5% diethylene glycol. The preferred ratios are approximately 60% water/40% diethylene glycol to 95% water/5% diethylene glycol. Percentages are based on the total weight of the aqueous carrier medium. A mixture of water and butyl carbitol is also an effective aqueous carrier medium.

The amount of aqueous carrier medium in the ink is typically in the range of 70% to 99.8%, and preferably 80% to 99.8%, based on total weight of the ink.

The aqueous carrier medium can be made to be fast penetrating (rapid drying) by including surfactants or penetrating agents such as glycol ethers and 1,2-alkanediols. Glycol ethers include ethylene glycol monobutyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methyl-1-methoxybutanol, propylene glycol mono-t-butyl ether, propylene glycol mono-n-propyl ether, propylene glycol mono-iso-propyl ether, propylene glycol mono-n-butyl ether; dipropylene glycol mono-n-butyl ether, dipropylene glycol mono-n- propyl ether, and dipropylene glycol mono-isopropyl ether. 1,2-Alkanediols are preferably 1,2-C4-6 alkanediols, most preferably 1,2- hexanediol. Suitable surfactants include ethoxylated acetylene diols (e.g. Surfynols® series from Air Products), ethoxylated primary (e.g. Neodol® series from Shell) and secondary (e.g. Tergitol® series from Union Carbide) alcohols, sulfosuccinates (e.g. Aerosol® series from Cytec), organosilicones (e.g. Silwet® series from Witco) and fluoro surfactants (e.g. Zonyl® series from DuPont).

The amount of glycol ether(s) and 1,2-alkanediol(s) added must be properly determined, but is typically in the range of from 1 to 15% by weight and more typically 2 to 10% by weight, based on the total weight of the ink. Surfactants may be used, typically in the amount of 0.01 to 5% and preferably 0.2 to 2%, based on the total weight of the ink.

### Other Additives

Other additives, such as biocides, humectants, chelating agents and viscosity modifiers, may be added to the ink for conventional purposes.

Biocides may be used to inhibit growth of microorganisms.

Inclusion of sequestering (or chelating) agents such as ethylenediaminetetraacetic acid (EDTA), iminodiacetic acid (IDA), ethylenediamine-di(o-hydroxyphenylacetic acid) (EDDHA), nitrilotriacetic acid (NTA), dihydroxyethylglycine (DHEG), trans-1,2- cyclohexanediaminetetraacetic acid (CyDTA), dethylenetriamine-N,N,N',N", N"-pentaacetic acid (DTPA), and glycoletherdiamine-N,N,N',N'-tetraacetic acid (GEDTA), and salts thereof, may be advantageous, for example, to eliminate deleterious effects of heavy metal impurities.

Other polymer additives, if used, can be soluble or dispersed polymer(s). They can be any suitable polymer, for example, soluble polymers may include linear homopolymers, copolymers, block polymers or natural polymers. They also can be structured polymers including graft or branched polymers, stars, and dendrimers. The dispersed polymers can include latexes, and polyurethane dispersions. The polymers may be made by any known process including but not limited to free radical, group transfer, ionic, RAFT, condensation and other types of polymerization. Useful classes of polymers include, for example, acrylics, styrene-acrylics, polyurethanes and alginates. These other polymer additives can be chosen from polymers that are capable of functioning as ISD polymer dispersants, but are not utilized as such.

These polymer additives can be effective in improving gloss and other properties while not sacrificing optical density. Other properties that can be affected by the polymer additives include, for example, reliability for thermal inkjet printing and image durability.

### Ink Properties

Drop velocity, separation length of the droplets, drop size and stream stability are greatly affected by the surface tension and the viscosity of the ink. Ink jet inks typically have a surface tension in the range of 20 mN/m to 70 mN/m (20 dyne/cm to 70 dyne/cm) at 25°C. Viscosity can be as high as 30 mPa·s (30 cP) at 25°C, but is typically somewhat lower. The ink has physical properties that can be adjusted to the ejecting conditions and printhead design. The inks should have excellent storage stability for long periods so as not clog to a significant extent in an ink jet apparatus. Further, the ink should not corrode parts of the ink jet printing device it comes in contact with, and it should be essentially odorless and non-toxic.

Although not restricted to any particular viscosity range or printhead, lower viscosity inks can be used, and may be preferred for certain applications. Thus the viscosity (at 25°C) of the inks can be less than 7 mPa·s (7 cps), less than 5 mPa·s (5 cps), or even less than 3.5 mPa·s (3.5 cps).

### Ink Sets

Ink sets suitable for use with the present invention comprise at least three primary color inks: a cyan ink, a magenta ink and a yellow ink (CMY), wherein at least one (and preferably all three) of these inks are based on ISDs. The ink set may optionally contain additional inks, and particularly a black ink (making a CMYK ink set).

When the ink set contains a black ink, pigment is generally preferred for black from the standpoint of high optical density. A preferred black pigment is a carbon black pigment, and particularly an SDP black. Examples of SDP blacks and inks based thereon may be found, for example, US5554739, US5571311, US5609671, US5672198, US5698016, US5707432, US5718746, US5747562, US5749950, US5803959, US5837045, US5846307, US5851280, US5861447, US5885335, US5895522, US5922118, US5928419, US5976233, US6057384, US6099632, US6123759, US6153001, US6221141, US6221142, US6221143, US6277183, US6281267, US6329446, US6332919, US6375317, US2001/0035110, EP-A-1086997, EP-A-1114851, EP-A-1158030, EP-A-1167471, EP-A-1122286, WO01/10963, WO01/25340 and WO01/94476.

The SDPs may be prepared by grafting a functional group or a molecule containing a functional group onto the surface of the pigment, or by physical treatment (such as vacuum plasma), or by chemical treatment (for example, oxidation with ozone, or hypochlorous acid). A single type or a plurality of types of hydrophilic functional groups may be bonded to one pigment particle. The type and the degree functionalization may be properly determined by taking into consideration, for example, dispersion stability in ink, color density, and drying properties at the front end of an ink jet head. Further details may be found by reference to the numerous publications mentioned above.

In one preferred embodiment, the hydrophilic functional group(s) on the SDP are primarily carboxyl groups, or a combination of carboxyl and hydroxyl groups; even more preferably the hydrophilic functional groups on the SDP are directly attached and are primarily carboxyl groups, or a combination of carboxyl and hydroxyl.

Preferred pigments in which the hydrophilic functional group(s) are directly attached may be produced, for example, by a method described in WO01/94476. Carbon black treated by the method described in this publication has a high surface active hydrogen content which is neutralized with base to provide very stable dispersions in water.

In addition to the black ink, the ink set may further include include one or more other colored inks such as, for example, an orange ink and/or a green ink.

The ink set may further comprise a fixing solution, which may be advantageous in reducing blurring and strikethrough in fast drying aqueous inks. See, for example; US5746818, US6450632, US20020044185, EP1258510 and USSN 10/755,630 (filed 12 January 2004, claiming priority from US provisional Application Serial No. 60/449,760 (filed February 25, 2003)).

This invention now will be further illustrated, but not limited, by the following examples.

### EXAMPLES

### Polymeric Dispersants

The following synthetic examples were all based on group transfer polymerization (GTP), although other types of polymerization processes can be used to generate similar types of polymers. In the case of the block polymers, the current block was at least 95 % converted before adding the mixture of monomers for the next block. In all cases, the feed cycle strategy is described. However, the synthesis was terminated when 99% of the polymer was converted as detected by HPLC. The molecular weight reported (unless otherwise noted) is based on theoretical considerations. For the random linear polymers, the ratio given is the weight ratio of the monomer unit in the final polymer; for the triblock and other polymers the ratio is the mole ratio of the monomer components.

Standard laboratory techniques were employed for the following examples.

The acid value was determined by titration and is reported as mg/gram of polymer solids. Molecular weight was determined by GPC. The GPC separations were carried out using a four column set consisting of two 500-Å,and two 100-Å 30cm x 7.8mm i.d. Microstyragel columns (Waters, Milford, MA). The tetrahydrofuran mobile phase was delivered by a Hewlett-Packard (PaloAlto,CA) model 1090 gradient liquid chromatograph at a flowrate of 1.0mL/min. The eluting species were detected using a Hewlett-Packard 1047A differential refractive detector. Narrow low-molecular-weight poly(methylmethacrylate) standards were used as calibrants. The particle size was determined by dynamic light scattering using a Microtrac Analyzer, Largo Florida. For many of the dispersion steps, a Model 100 F or Y, Microfluidics System was used (Newton MA)

It should be noted that, in referring to the polymer compositions, a double slash indicates a separation between blocks and a single slash indicates a random copolymer. Thus, for example, BZMA/MAA 90/10 is a random copolymer having about 90 wt% benzyl methacrylate (BZMA) and about 10 wt% methacrylic acid (MAA) units in the final polymer; and BZMA//MAA//BZMA 8//10//8 is an ABA triblock polymer with a first A block that is on average 8 BZMA units long, a B block that is on average 10 MAA units long, and a final A block that is on average 8 BZMA units long.

### (1a) BZMA/MAA 90/10 Random Linear Copolymer

A 5-liter flask was equipped with a mechanical stirrer, thermometer, N₂ inlet, drying tube outlet, and addition funnels. Tetrahydrofuran (THF), 1715.1 g, was charged to the flask. The catalyst (tetrabutyl ammonium m-chlorobenzoate, 1.2 ml of a 1.0 M solution in acetonitrile) was then added. Initiator (1-methoxy-1-trimethylsiloxy-2-methyl propene, 51.33 g (0.295 moles)) was injected. Feed I (tetrabutyl ammonium m-chlorobenzoate, 1.2 ml of a 1.0 M solution in acetonitrile and THF, 10.0 g) was started and added over 180 minutes. Feed II (trimethylsilyl methacrylate, 267.6 g (1.69 moles) and benzyl methacrylate (BZMA), 1305.6 g (7.42 moles)) was started at 0.0 minutes and added over 70 minutes.

At 173 minutes, 60.5 g of methanol was added to the above solution and distillation began. During the first stage of distillation, 503.0 g of material was removed. The final polymer solution was 51.5% solids.

The polymer had a composition of BZMA/MAA 90/10; molecular weight (Mn) of 5048; and an acid value of 1.24 (milliequivalents/gram of polymer solids) based on total solids.

### (1b) BZMA/MAA 90/10 Random Linear Copolymer

A 3-liter flask was equipped with a mechanical stirrer, thermometer, N₂ inlet, drying tube outlet, and addition funnels. Tetrahydrofuran (THF), 1200 g, was charged to the flask. The catalyst (tetrabutyl ammonium m-chlorobenzoate, 0.75 ml of a 1.0 M solution in acetonitrile) was then added. Initiator (1,1-bis(trimethylsilyloxy)-2-methyl propene, 42.5 g (0.18 moles)) was injected. Feed I (tetrabutyl ammonium m-chlorobenzoate, 0.4 ml of a 1.0 M solution in acetonitrile and THF, 5 g) was started and added over 180 minutes. Feed II (trimethylsilyl methacrylate, 135.5 g (0.86 moles) and benzyl methacrylate, 825.5 g (4.69 moles)) was started at 0.0 minutes and added over 45 minutes.

At 125 minutes, 70 g of methanol was added to the above solution and distillation began. During the first stage of distillation, 375 g of material was removed. The final polymer solution was 48.5 % solids.

The polymer had a composition of BZMA/MAA 90/10; molecular weight (Mn) of 4995, and an acid value of 1.22 (milliequivalents/gram of polymer solids) based on total solids.

### (1c) BZMA/MAA 90/10 Random Linear Copolymer with 2-pyrrolidone as Final Solvent

In a 2 liter flask, 1000 g of polymer 1 a solution was added. The solution was heated to reflux and 284 g of solvent was distilled off. Then 221 g of 2-pyrrolidone was added to the flask. After another 156 g of solvent was distilled off, 266 g of 2-pyrrolidone was added to make a polymer solution of 47% solids.

### (2a) BZMA/MAA 92/8 Random Linear Copolymer

The same preparation was used as in preparation 1 a except 213.2 g of trimethylsilyl methacrylate and 1334.5 g of benzyl methacrylate were used. This resulted in a polymer solution of 51.7% solids, with a composition of BZMA/MAA 92/8, a molecular weight (Mn) of 5047 and an acid value of 0.99 (meq/gram of polymer solids.) based on total solids.

### (2b) BZMA/MAA 92/8 Random Linear Copolymer with 2-pyrrolidone as Final Solvent

In a 5 liter flask, 1449 g of polymer 2a solution was added along with 412 g of 2-pyrrolidone. The solution was heated to reflux and 56 g of solvent was distilled off. Then 320.5 g of 2-pyrrolidone was added to make a polymer solution of 45.7% solids.

### (2c) BZMA/MAA 92/8 Random Linear Copolymer

The same preparation was used as in polymer preparation 1 b except 103.0g trimethylsilyl methacrylate (0.65 moles), 844 g benzyl methacrylate (4.80 moles) and 55 g methanol were used, and 354g of material was removed. The final polymer solution was 48.4% solids.

The polymer had a composition of BZMA/MAA 92/8; molecular weight (Mn) of 4999, and an acid value of 0.98 (meq/gram of polymer solids) based on total solids.

### (2d) Neutralization of Polymer 2b with Potassium Hydroxide

The following ingredients were combined with stirring:

| INGREDIENT | AMOUNT (G) |
|---|---|
| Polymer preparation 2b | 33.0 |
| 45% aqueous potassium hydroxide solution | 4.4 |
| D.I. Water | 63.1 |

### (3a) BZMA/MAA 94/6 Random Linear Copolymer

The same preparation was used as in preparation 1 a except 160.3 g of trimethylsilyl methacrylate and 1363.5 g of benzyl methacrylate were used. The result was of 49.9% solids polymer solution with a composition of BZMA/MAA 94/6, a molecular weight (Mn) of 5047, and an acid value of 0.77 (meq/gram of polymer solids.) based on total solids.

### (3b) BZMA/MAA 94/6 Random Linear Copolymer with 2-pyrrolidone as Final Solvent

In a preparation similar to 2b, the polymer 3a solution was prepared with 2-pyrrolidone as the final solvent. The resulting solids content was 43.93%, THF was 8.8% and 2-pyrrolidone was 47.27%.

### (3c) BZMA/MAA 94/6 Random Linear Copolymer

The same preparation was used as in preparation 1 b except 69.9g trimethylsilyl methacrylate (0.44 moles), 862.0 g benzyl methacrylate (4.90 moles) and 55 g methanol were used, and 359g of material was removed. The final polymer solution was 49.0% solids.

The polymer had a composition of BZMA/MAA 94/6, a molecular weight (Mn) of 4999 and an acid value of 0.69 (meq/gram of polymer solids) based on total solids.

### (4a) BZMA//MAA//BZMA 8//10//8 Triblock Copolymer

A 5-liter flask was equipped with a mechanical stirrer, thermometer, N₂ inlet, drying tube outlet, and addition funnels. THF, 1721.0 g, was charged to the flask. The catalyst (tetrabutyl ammonium m-chlorobenzoate, 1.9 ml of a 1.0 M solution in acetonitrile) was then added. Initiator (1-methoxy-1-trimethylsiloxy-2-methyl propene, 80.17 g (0.46 moles)) was injected. Feed I (tetrabutyl ammonium m-chlorobenzoate, 1.8 ml of a 1.0 M solution in acetonitrile and THF, 16.92 g) was started and added over 210 minutes. Feed II (BZMA, 649.3 g (3.69 moles)) was started at 0.0 minutes and added over 45 minutes. Thirty minutes after Feed II was completed (over 99 % of the monomers had reacted), Feed III (trimethylsilyl methacrylate, 726.7 g (4.60 moles)) was started and added over 30 minutes. One hundred and fifty minutes after Feed III was completed (over 99 % of the monomers had reacted), Feed IV (BZMA, 647.5 g (3.68 moles)) was started and added over 30 minutes.

At 500 minutes, 300.0 g of methanol was added to the above solution and distillation began. 750.0 g of material was removed to produce a final polymer solution of 51.5% solids in tetrahydrofuran.

The polymer has a composition of BZMA//MAA//BZMA 8//10//8, a molecular weight (Mn) of 3780, and an acid value of 2.88 (meq/gram of polymer solids) based on total solids.

### (4b) BZMA//MAA//BZMA 8//10//8 Triblock Copolymer with 2-pyrrolidone as Final Solvent

A 3 liter flask was equipped with a heating mantle, stirrer and condenser. One thousand grams of the polymer 4a solution of was charged along with 500 g of 2-pyrrolidone. The flask was heated to reflux and distillation was begun until 250.0 g of solvent was removed, and then an additional 447.0 g of 2-pyrolidone was added. The distillation was continued until another 200 g of solvent was removed. This left a polymer solution of 35.2% solids in 2-pyrolidone.

### (5a) BZMA//MAA//BZMA 8//5//8 Triblock Copolymer

The same preparation was used as in preparation 4a except 363.5 g of trimethylsilyl methacrylate was used. This made a polymer solution of 51.7% solids with a composition of BZMA//MAA//BZMA 8//5//8, a molecular weight (Mn) of 3350, and an acid value of 1.59 (meq/gram of polymer solids) based on total solids.

### (5b) BZMA//MAA//BZMA 8//5//8 Triblock Copolymer with 2-pyrrolidone as Final Solvent

The same preparation was used as in preparation 4b except that the polymer 5a solution was used. This made a polymer solution of 35.7% solids in 2-pyrrolidone.

### (6a) BZMA//MAA 5//1 Short B Block Copolymer

A 3-liter flask was equipped with a mechanical stirrer, thermometer, N₂ inlet, drying tube outlet, and addition funnels. THF, 1000.6 g, was charged to the flask. The catalyst (tetrabutyl ammonium m-chlorobenzoate, 4.0 ml of a 1.0 M solution in acetonitrile) was then added. Initiator (1,1-bis(trimethylsiloxy)-2-methyl propene, 232.7 g (1.00 moles)) was injected. Feed I (benzyl methacrylate, 881.0 g (5.00 moles)) was started at 0.0 minutes and added over 60 minutes.

At 190 minutes, 64.2 g of methanol was added to the above solution and distillation begun. 457.7 g of material was removed to produce a final polymer solution of 54.0% solids.

The polymer had a composition of BZMA//MAA 5//1, a molecular weight (Mn) of 886, and an acid value of 0.90 (meq/gram of polymer solids) based on total solids.

### (6b) BZMA//MAA 5//1 short B Block Copolymer with 2-pyrrolidone as Final Solvent

The same preparation was used as in preparation 4b except the polymer 6a solution was used. This made a polymer solution of 43.75% solids in 2-pyrolidone.

### (7a) BZMA/ETEGMA/MAA 84/10/6 Random Linear Copolymer

A 3-liter flask was equipped with a mechanical stirrer, thermometer, N₂ inlet, drying tube outlet, and addition funnels. THF, 1200 g, was charged to the flask. The catalyst (tetrabutyl ammonium m-chlorobenzoate, 0.76 ml of a 1.0 M solution in acetonitrile) was then added. Initiator (1-methoxy-1-trimethylsiloxy-2-methyl propene, 32 g (0.18 moles)) was injected. Feed I (tetrabutyl ammonium m-chlorobenzoate, 0.76 ml of a 1.0 M solution in acetonitrile and THF, 10 g) was started and added over 300 minutes. Feed II (trimethylsilyl methacrylate, 99.4 g (0.63 moles), benzyl methacrylate, 754.1 g (4.28 moles), and ethoxy triethylene glycol methacrylate (ETEGMA), 92.1g (0.37 moles)) was started at 0.0 minutes and added over 45 minutes.

At 175 minutes, 55 g of methanol was added to the above solution and distillation begun. 350.5 g of material was removed to produce a final polymer solution of 49.1 % solids.

The polymer had a composition of BZMA/ETEGMA/MAA 84/10/6, molecular weight (Mn) of 4994, and an acid value of 0.79 (meq/gram of polymer solids) based on total solids.

### (7b) BZMA/ETEGMA/MAA 84/10/6 Random Linear Copolymer with 2-pyrrolidone as Final Solvent

In a 2 liter flask, 1000 g of polymer 7a solution was added. The solution was heated to reflux and 256 g of solvent was distilled off. Then 224 g of 2-pyrrolidone was added to the flask. After another 184 g of solvent was distilled off, and 269 g of 2-pyrrolidone was added to make a polymer solution of 47% solids.

### (7c) BZMA/ETEGMA/MAA 64/30/6 Random Linear Copolymer

The same preparation was used as in preparation 7a except 576.1 g benzyl methacrylate (3.27 moles) and 270.1 g ethoxy triethylene glycol methacrylate (1.10 moles) were used. The final polymer solution was 48.5% solids.

The polymer had a composition of BZMA/ETEGMA/MAA 64/30/6, a molecular weight (Mn) of 4994, and an acid value of 0.78 (meq/gram of polymer solids) based on total solids.

### (8a) BZMA/HEMA/MAA 78/16/6 Random Linear Copolymer

A 3-liter flask was equipped with a mechanical stirrer, thermometer, N₂ inlet, drying tube outlet, and addition funnels. THF, 1200 g, was charged to the flask. The catalyst (tetrabutyl ammonium m-chlorobenzoate, 0.77 ml of a 1.0 M solution in acetonitrile) was then added. Initiator (1-methoxy-1-trimethylsiloxy-2-methyl propene, 32 g (0.18 moles)) was injected. Feed I (tetrabutyl ammonium m-chlorobenzoate, 0.39 ml of a 1.0 M solution in acetonitrile and THF, 5 g) was started and added over 150 minutes. Feed II (trimethylsilyl methacrylate, 99.4 g (0.63 moles), benzyl methacrylate, 703.1 g (3.99 moles) and 2-(trimethylsilyloxy)ethyl methacrylate, 223.1 g (1.10 moles)) was started at 0.0 minutes and added over 45 minutes.

At 135 minutes, 125 g of methanol and 0.34 g of dichloroacetic acid were added to the above solution and stirred for 30 minutes. Then 505 g of material was removed by distillation to produce a final polymer solution of 50.8% solids.

The polymer had a composition of BZMA/HEMA/MAA 78/16/6, a molecular weight (Mn) of 4996, and an acid value of 0.70 (meq/gram of polymer solids) based on total solids.

### (9) BZMA/ETEGMA/HEMA/MAA 82.5/7.5/4/6 Random Linear Copolymer

A 3-liter flask was equipped with a mechanical stirrer, thermometer, N₂ inlet, drying tube outlet, and addition funnels. THF, 1100 g, was charged to the flask. The catalyst (tetrabutyl ammonium m-chlorobenzoate, 0.62 ml of a 1.0 M solution in acetonitrile) was then added. Initiator (1,1-bis(trimethylsilyloxy)-2-methyl propene, 35 g (0.15 moles)) was injected. Feed I (tetrabutyl ammonium m-chlorobenzoate, 0.32 ml of a 1.0 M solution in acetonitrile and THF, 5 g) was started and added over 150 minutes. Feed II (trimethylsilyl methacrylate, 96.2 g (0.61 moles), benzyl methacrylate, 744.3 g (4.22 moles), ethoxy triethylene glycol methacrylate, 67.6 g (0.27 moles) and 2-(trimethylsilyloxy)ethyl methacrylate, 56.1 g (0.28 moles)) was started at 0.0 minutes and added over 45 minutes.

At 135 minutes, 70 g of methanol and 0.34 g of dichloroacetic acid were added to the above solution and stirred for 30 minutes. Then 330 g of material was removed by distillation to produce a final polymer solution of 50.85% solids.

The polymer had a composition of BZMA/ETEGMA/HEMA/MAA 82.5/7.5/4/6, a molecular weight (Mn) of 6001, and an acid value of 0.86 (meq/gram of polymer solids) based on total solids.

### (10) BZMA//DMAEMA 13//3.4 Diblock Copolymer

A 3-liter flask was equipped with a mechanical stirrer, thermometer, N₂ inlet, drying tube outlet, and addition funnels. THF, 540 g, was charged to the flask. The catalyst (tetrabutyl ammonium m-chlorobenzoate, 0.69 g of a 1.0 M solution in acetonitrile) was then added. Initiator (1-methoxy-1-trimethylsiloxy-2-methyl propene, 29.8 g (0.17 moles)) was injected. Feed I (tetrabutyl ammonium m-chlorobenzoate, 0.35 g of a 1.0 M solution in acetonitrile and THF, 5 g) was started and added over 150 minutes. Feed II (N,N-dimethylaminoethylmethacrylate, 92.3 g (0.59 moles)) was started at 0.0 minutes and added over 30 minutes. Feed III (benzyl methacrylate, 390.8 g (2.22 moles)) was started at 60 minutes and was added over 30 minutes.

At 135 minutes, 11 g of methanol was added to the above solution and Feed I was stopped. Distillation was used to remove 48 g of material, resulting in a final polymer solution of 47.3% solids.

The polymer had a composition of BZMA//DMAEMA 13//3.4 (mole ratio), a theoretical molecular weight (Mn) of 2930, and an amine value of 1.18 (meq /gram of polymer solids) based on total solids.

### (10b) BZMA//DMAEMA 13//3.4 Diblock Copolymer with 2-pyrrolidone as Final Solvent

In a 2 liter flask, 950 g of the polymer 10(a) solution was added. The solution was heated to reflux and 241 g of solvent was distilled off. Then 214 g of 2-pyrrolidone was added to the flask. After another 183 g of solvent was distilled off, 258 g of 2-pyrrolidone was added to make a polymer solution of 45.6% solids.

### (10c) BZMA//DMAEMA 13//4.4 Diblock Copolymer

The same preparation was used as in preparation 10a except 118.1 g N,N-dimethylaminoethylmethacrylate (0.75 moles) was used, and the methanol was added after 170 minutes from the start of the Feeds. The polymer had a composition of BZMA//DMAEMA 13//4.4 (mole ratio), a theoretical molecular weight (Mn) of 3080, and an amine value of 1.49 (meq/gram of polymer solids) based on total solids.

### (11a) BZMA/DMAEMA 85.5/14.5 Random Linear Copolymer

A 3-liter flask was equipped with a mechanical stirrer, thermometer, N₂ inlet, drying tube outlet, and addition funnels. THF, 552 g, was charged to the flask. The catalyst (tetrabutyl ammonium m-chlorobenzoate, 0.37 g of a 1.0 M solution in acetonitrile) was then added. Initiator (1-methoxy-1-trimethylsiloxy-2-methyl propene, 16.8 g (0.096 moles)) was injected. Feed I (tetrabutyl ammonium m-chlorobenzoate, 0.19 g of a 1.0 M solution in acetonitrile and THF, 5 g) was started and added over 150 minutes. Feed II (N,N-dimethylaminoethylmethacrylate, 71.7 g (0.46 moles) and benzyl methacrylate, 419.6 g (2.38 moles)) was started at 0.0 minutes and added over 30 minutes.

At 85 minutes, 6.6 g of methanol was added to the above solution and Feed I was stopped. Distillation was used to remove 28.5 g of material, resulting in a final polymer solution of 47.8% solids.

The polymer had a composition of BZMA/DMAEMA 85.5/14.5 (weight ratio), a theoretical molecular weight (Mn) of 5370, and an amine value of 0.92 (meq/gram of polymer solids) based on total solids.

### (11b) BZMA/DMAEMA 85.5/14.5 Random Linear Copolymer with 2-pyrrolidone as Final Solvent

In a 2 liter flask, 950 g of the polymer 11a solution was added. The solution was heated to reflux and 251 g of solvent was distilled off. Then 211 g of 2-pyrrolidone was added to the flask. After another 162 g of solvent was distilled off, 253 g of 2-pyrrolidone was added to make a polymer solution of 44.8% solids.

### (12a) BZMA/DMAEMA 76.4/23.6 Random Linear Copolymer

The same preparation was used as in preparation 11 a except except 376 g benzyl methacrylate (2.13 moles) and 116.2 g N,N-dimethylaminoethylmethacrylate (0.74 moles) were used, and the methanol was added after 53 minutes from the start of the Feeds.

The polymer had a composition of BZMA/DMAEMA 76.4/23.6 (weight ratio), a theoretical molecular weight (Mn) of 5370, and an amine value of 1.6 (meq/gram of polymer solids) based on total solids.

### (12b) BZMA/DMAEMA 76.4/23.6 Random Linear Copolymer with 2-pyrrolidone as Final Solvent

In a 2 liter flask, 980 g of the polymer 12a solution was added. The solution was heated to reflux and 263 g of solvent was distilled off. Then 217 g of 2-pyrrolidone was added to the flask. After another 210 g of solvent was distilled off, 260 g of 2-pyrrolidone was added to make a polymer solution of 45.8% solids.

### (13) MMA/DMAEMA 85.5/14.5 (weight ratio) Random Linear Copolymer

The same preparation was used as in preparation 11a except 16.4 g 1-methoxy-1-trimethylsiloxy-2-methyl propene (0.094 moles) was used, 419.6 g methyl methacrylate (4.19 moles) was used instead of benzyl methacrylate, and the methanol was added after 93 minutes from the start of the feeds.

### (14a) BZMA//MAA 13//3 Short B Block Copolymer

A 12-liter flask was equipped with a mechanical stirrer, thermometer, N₂ inlet, drying tube outlet, and addition funnels. THF, 3866 g, was charged to the flask. The catalyst (tetrabutyl ammonium m-chlorobenzoate, 1.2 ml of a 1.0 M solution in acetonitrile) was then added. Initiator (1,1-bis(trimethylsilyloxy)-2-methyl propene, 281.1 g (1.21 moles)) was injected. Feed I (trimethylsilyl methacrylate, 382.8 g (2.42 moles)) was started and added over 30 minutes. At 117 minutes, Feed II (benzyl methacrylate, 2767.7 g (15.73 moles)) was started and added over 64 minutes. At 240 minutes, 232 g of methanol was added to the above solution, and distillation begun. 1180 g of material was removed, resulting in a final polymer solution of 50.82% solids.

The polymer had a composition of BZMA//MAA 13//3 (mole ratio), a molecular weight (Mn) of 2522, a polydispersity of 1.26, and an acid value of 1.23 (meq/gram of polymer solids) based on total solids

### (14b) BZMA//MAA 13//3 Short B Block Copolymer with 2-pyrrolidone as Final Solvent

In a 12-liter flask, 5300 g of the polymer 14a solution was heated to reflux and 1353 g of solvent was distilled off. Then 1188 g of 2-pyrrolidone was added to the flask. After another 1190 g of solvent was distilled off, 1428 g of 2-pyrrolidone was added to make a polymer solution of 46.31 % solids.

### (PA1a) Polymer Additive ETEGMA/MAA 74/26 Random Copolymer

A 3-liter flask was equipped with a mechanical stirrer, thermometer, N₂ inlet, drying tube outlet, and addition funnels. THF, 760 g, was charged to the flask. The catalyst (tetrabutyl ammonium m-chlorobenzoate, 0.82 g of a 1.0 M solution in acetonitrile) was then added. Initiator (1,1-bis(trimethylsilyloxy)-2-methyl propene, 24.0 g (0.10 moles)) was injected. Feed I (tetrabutyl ammonium m-chlorobenzoate, 0.4 g of a 1.0 M solution in acetonitrile and THF, 5 g) was started and added over 150 minutes. Feed II (trimethylsilyl methacrylate, 225.1 g (1.42 moles) and ethoxy triethylene glycol methacrylate (ETEGMA), 377.6 g (1.53 moles)) was started at 0.0 minutes and added over 45 minutes. At 250 minutes, 100 g of methanol was added to the above solution and distillation begun. 441 g of material was removed to yield a polymer solution of 49.7% solids.

The polymer had a composition of ETEGMA/MAA 74/26 wt%, a molecular weight (Mn) of 5800, a polydispersity of 1.27, and an acid value of 3.05 (meq/gram of polymer solids) based on total solids.

### (PA1b) Polymer Additive ETEGMA/MAA 74/26 Random Copolymer with 2-pyrrolidone as Final Solvent

In a 3-liter flask, 838 g of the polymer PA1a solution was heated to reflux and 216 g of solvent was distilled off. Then 187 g of 2-pyrrolidone was added to the flask. After another 167 g of solvent was distilled off, 225 g of 2-pyrrolidone was added to make a polymer solution of 48.40% solids.

### (PA1c) Neutralization of Polymer Additive ETEGMA/MAA 74/26 Random Copolymer with Potassium Hydroxide

The following ingredients were combined with stirring:

| INGREDIENT | AMOUNT (G) |
|---|---|
| Polymer PA1b solution | 32.6 |
| 45% aqueous potassium hydroxide solution | 5.4 |
| D.I. Water | 67.3 |

### (PA2a) Polymer Additive HEMA/MAA 74/26 Random Copolymer

A 3-liter flask was equipped with a mechanical stirrer, thermometer, N₂ inlet, drying tube outlet, and addition funnels. THF, 1172 g, was charged to the flask. The catalyst (tetrabutyl ammonium m-chlorobenzoate, 0.8 ml of a 1.0 M solution in acetonitrile) was then added. Initiator (1,1-bis(trimethylsilyloxy)-2-methyl propene, 23.8 g (0.10 moles)) was injected. Feed I (tetrabutyl ammonium m-chlorobenzoate, 0.4 ml of a 1.0 M solution in acetonitrile and THF, 5 g) was started and added over 130 minutes. Feed II (trimethylsilyl methacrylate, 225.9 g (1.43 moles) and 2-(trimethylsilyloxy)ethyl methacrylate, 587.1 g (2.91 moles)) was started at 0.0 minutes and added over 45 minutes. At 150 minutes, 285 g of methanol was added to the above solution and distillation begun. 1234 g of material was removed.

The polymer had a composition of HEMA/MAA 74/26 wt%, a molecular weight (Mn) of 5695, a polydispersity of 1.53, and an acid value of 2.77 (meq/gram of polymer solids) based on total solids.

### (PA2b) Polymer Additive HEMA /MAA 74/26 Random Copolymer with 2-pyrrolidone as Final Solvent

In a 3-liter flask, 850 g of the polymer PA2a solution was heated to reflux and 155 g of solvent was distilled off. Then 421g of 2-pyrrolidone was added to the flask. After another 45 g of solvent was distilled off, 150 g of 2-pyrrolidone and 0.3 g dichloroacetic acid were added. Another 74 g of solvent was distilled off to make a polymer solution of 45.58% solids.

### (PA2c) Neutralization of Polymer Additive HEMA /MAA 74/26 Random Copolymer with Potassium Hydroxide

The following ingredients were combined with stirring:

| INGREDIENT | AMOUNT (G) |
|---|---|
| Polymer PA2b solution | 35.4 |
| 45% aqueous potassium hydroxide solution | 5.0 |
| D.I. Water | 64.5 |

### (PA3a) Polymer Additive MA/AA 85/15 Random Copolymer

A 3-liter flask was equipped with a mechanical stirrer, thermometer, N₂ inlet, drying tube outlet, and addition funnels. Methyl ethyl ketone (MEK), 850 g, was charged to the flask and heated to reflux. After 20 minutes of reflux, Feed I (methyl acrylate (MA), 765.6 g (8.9 moles) and acrylic acid (AA), 135.0 g (1.9 moles)) was started and added over 270 minutes. Feed II (Vazo® 52 (DuPont), 46.0 g (0.19 moles) and MEK, 250.2 g) was started simultaneously with Feed I and added over 300 minutes. When Feed II ended, the reaction was held at reflux for another 60 minutes.

The polymer had a composition of MA/AA 85/15 wt%, a molecular weight (Mn) of 6649, a polydispersity of 2.19, and an acid value of 1.99 (meq/gram of polymer solids) based on total solids.

### (PA3b) Polymer Additive MA/AA 85/15 Random Copolymer with 2-pyrrolidone as Final Solvent

In a 3 liter flask, the polymer PA3a solution was heated to reflux and 611 g of solvent was distilled off. Then 460 g of 2-pyrrolidone was added to the flask. After another 342 g of solvent was distilled off, 490 g of 2-pyrrolidone was added to make a polymer solution of 46.1% solids.

### (PA3c) Neutralization of Polymer Additive MA/AA 85/15 Random Copolymer with Potassium Hydroxide

The following ingredients were combined with stirring:

| INGREDIENT | AMOUNT (G) |
|---|---|
| Polymer PA3b solution | 34.0 |
| 45% aqueous potassium hydroxide solution | 3.5 |
| D.I. Water | 67.0 |

### (PA4a) Polymer Additive nBA/ETEGMA/MPEG1000 40/30/30 Random Copolymer

A 5-liter flask was equipped with a mechanical stirrer, thermometer, N₂ inlet, drying tube outlet, and addition funnels. Ethoxy triethylene glycol methacrylate (ETEGMA), 60 g (0.24 moles), n-butyl acrylate (nBA), 80 g (0.63 moles), Bisomer S10W MPEG 1000, 120 g (0.06 moles), and isopropyl alcohol (IPA), 790 g, were charged to the flask and heated to reflux. Feed I (ETEGMA, 241 g (0.98 moles) and nBA, 320 g (2.5 moles)) was started and added over 180 minutes. Feed II (Bisomer S10W MPEG 1000, 480 g (0.22 moles)) was started simultaneously with Feed I and added over 180 minutes. Feed III (Vazo® 52, 10 g (0.04 moles), methyl ethyl ketone (MEK), 30 g, and IPA, 30 g) was started simultaneously with Feeds I and II and added over 210 minutes. When Feed III ended, Feed IV (Vazo® 52, 15 g (0.06 moles), MEK, 45 g, and IPA, 45 g) was started and added over 10 minutes. Following Feed IV, the reaction was held at reflux for another 110 minutes.

The polymer had a composition of nBA/ETEGMA/MPEG1000 40/30/30 wt%, a molecular weight (Mn) of 6638, and a polydispersity of 3:11

### (PA4b) Polymer Additive nBA/ETEGMA/MPEG1000 40/30/30 Random Copolymer with 2-pyrrolidone as Final Solvent

In a 5 liter flask, 751 g of 2-pyrrolidone was added to the polymer PA4a solution. The solution was heated to reflux and 1086 g of solvent was distilled off. Then 337 g of 2-pyrrolidone was added to the flask to make a polymer solution of 43.33% solids.

### (CP1) Comparison Polymer 1 - ETEGMA//BZMA//MAA 3.6//13.6//10.8

The following is an example of how to make a block polymer that has both ionic as well as steric stabilization.

A 3-liter flask was equipped with a mechanical stirrer, thermometer, N₂ inlet, drying tube outlet, and addition funnels. THF, 291.3 g, was charged to the flask. The catalyst (tetrabutyl ammonium m-chlorobenzoate, 0.44 ml of a 1.0 M solution in acetonitrile) was then added. Initiator (1,1-bis(trimethylsiloxy)-2-methyl propene, 20.46 g (0.0882 moles)) was injected. Feed I (tetrabutyl ammonium m-chlorobenzoate, 0.33 ml of a 1.0 M solution in acetonitrile and THF, 16.92 g) was started and added over 185 minutes. Feed II (trimethylsilyl methacrylate, 152.00 g (0.962 moles)) was started at 0.0 minutes and added over 45 minutes. One hundred and eighty minutes after Feed II was completed (over 99 % of the monomers had reacted), Feed III (benzyl methacrylate, 211.63 g (1.20 moles)) was started and added over 30 minutes. Forty minutes after Feed III was completed (over 99 % of the monomers had reacted), Feed IV (ethoxytriethyleneglycol methacrylate, 78.9 g (0.321 moles)) was started and added over 30 minutes.

At 400 minutes, 73.0 g of methanol and 111.0 g of 2-pyrrolidone were added to the above solution and distillation begun. 352.0 g of material was removed, then more 2-pyrrolidone 340.3 g was added and an additional 81.0 g of material was distilled out. Finally, 2-pyrrolidone, 86.9 g total, was added. The final polymer solution was at 40.0% solids.

The polymer had a composition of ETEGMA//BZMA//MAA 3.6//13.6//10.8, a molecular weight (Mn) of 4200, and an acid value of 2.90 (meq/gram of polymer solids) based on total solids.

### Neutralization of Comparison Polymer 1 with Potassium Hydroxide

The following ingredients were combined with stirring:

| INGREDIENT | AMOUNT (G) |
|---|---|
| CP1 solution | 50.0 |
| 45% aqueous potassium hydroxide solution | 6.2 |
| D.I. Water | 43.8 |

### (CP2) Comparison Polymer 2 - BZMA//MAA 13//10

The following is an example of how to make a block polymer that has both ionic as well as steric stabilization. The composition was BZMA//MAA 13//10.

A 12-liter flask was equipped with a mechanical stirrer, thermometer, N₂ inlet, drying tube outlet, and addition funnels. THF, 3750 g, and p-xylene, 7.4 g, were charged to the flask. The catalyst (tetrabutyl ammonium m-chlorobenzoate, 3.0 ml of a 1.0 M solution in acetonitrile) was then added. Initiator (1,1-bis(trimethylsiloxy)-2-methyl propene, 291.1 g (1.25 moles)) was injected. Feed I (tetrabutyl ammonium m-chlorobenzoate, 3.0 ml of a 1.0 M solution in acetonitrile) was started and added over 180 minutes. Feed II (trimethylsilyl methacrylate, 1975 g (12.5 moles)) was started at 0.0 minutes and added over 35 minutes. One hundred minutes after Feed II was completed (over 99 % of the monomers had reacted), Feed III (benzyl methacrylate, 2860 g (16.3 moles)) was started and added over 30 minutes.

At 400 minutes, 720 g of methanol was added to the above solution and distillation begun. During the first stage of distillation, 1764.0 g of material was removed. Then more methanol 304.0 g was added and an additional 2255.0 g of material was distilled out. The final polymer solution was at 49.7% solids.

The polymer had a composition of BZMA//MAA 13//10, a molecular weight (Mn) of 3200, and an acid value of 3.52 (meq/gram of polymer solids) based on total solids.

### Dispersion Preparation 1 - Black Dispersion (PD1)

An aqueous black pigment dispersion was prepared by mixing the following ingredients with adequate stirring:

| INGREDIENT | AMOUNT (G) |
|---|---|
| Polymer (from 4b) | 88.34 |
| Potassium hydroxide (45.0 % solids) | 10.96 |
| Deionized water | 209.15 |
| Carbon black (FW-18 Degussa) | 75.0 |
| Proxel® GXL | 3.7 |
| Dowanol® DPM | 250.0 |

This was mixed and then dispersed using a mill from Microfluidics. Then 550 g of the above mixture was diluted with 183.3 g of water, and dispersed again through the dispersion mill to yield a 7.5 wt% pigment dispersion with an average particle size of 157 nm.

### Dispersion Preparation 2 - Magenta Dispersion (PD2)

An aqueous magenta pigment dispersion was prepared by first milling the following ingredients on a 2 roll mill.

| INGREDIENT | AMOUNT (G) |
|---|---|
| Polymer (from 2a) | 275.59 |
| Magenta pigment (Monastral RT-355-D CIBA) | 210.0 |
| Tetraethylene glycol | 52.5 |

This was milled and made a magenta dispersion in a chip form that was 89.7 wt% solids. This was then let down by first mixing the following ingredients:

| INGREDIENT | AMOUNT (G) |
|---|---|
| Magenta chip | 167.24 |
| Lithium hydroxide | 2.29 |
| Deionized water | 300.61 |
| Proxel® GXL | 1.50 |
| Dowanol® DPM | 128.28 |

Then, the dispersion was mixed in a high speed disperser for 4 hours at 3000 rpm. After that 500.0 g of the dispersion was removed and mixed with 53.75 g of Dowanol® DPM and 253.75 g of deionized water. This dispersion was then milled in a media mill. The dispersion was then purified by diluting with water and removing excess solvents through an ultrafiltration process to generate a 14.09 wt% pigment solids dispersion that has less than 1.0 wt% of solvent (other than water).

### Dispersion Preparation 3 - Cyan Dispersion (PD3)

An aqueous cyan pigment dispersion was prepared by first milling the following ingredients on a 2 roll mill.

| INGREDIENT | AMOUNT (G) |
|---|---|
| Polymer (from 2a) | 420.96 |
| Cyan pigment (Aztech Chemisperse CC1531) | 433.33 |
| Tetraethylene glycol | 52.50 |

This was milled and made a cyan dispersion in a chip form that was 93.45 wt% solids. This was then let down by first mixing the following ingredients

| INGREDIENT | AMOUNT (G) |
|---|---|
| Cyan chip | 147.16 |
| 10% Lithium hydroxide monohydrate | 16.84 |
| Deionized water | 314.51 |
| Proxel® GXL | 1.50 |
| Dowanol® DPM | 120.00 |

Then, the dispersion was mixed in a high speed disperser for 3 hours at 4000 rpm and then followed by 4 hours milling in a media mill. The dispersion was then purified by diluting 341g of material with 441g deionized water, and removing excess solvents through an ultrafiltration process to generate a 13.65 wt% pigment solids dispersion that had less than 1.0 wt% of solvent (other than water), and average particle size of 123 nm.

### Dispersion Preparation 4 - Yellow Dispersion (PD4)

An aqueous yellow pigment dispersion was prepared by first milling the following ingredients on a 2 roll mill.

| INGREDIENT | AMOUNT (G) |
|---|---|
| Polymer (from 2a) | 226.67 |
| Yellow pigment (Aztech Chemisperse CY7480) | 233.33 |
| Tetraethylene glycol | 49.0 |

This was milled and made a yellow dispersion in a chip form that was 89.16 wt% solids. This was then let down by first mixing the following ingredients:

| INGREDIENT | AMOUNT (G) |
|---|---|
| Yellow chip | 151.58 |
| 10% Lithium hydroxide monohydrate | 16.84 |
| Deionized water | 370.08 |
| Proxel® GXL | 1.50 |
| Triethyleneglycol monobutyl ether | 60.00 |

Then, the dispersion was mixed in a high speed disperser (HSD) for 4 hours at 3000 rpm. It was then milled 4 hours in a media mill. The dispersion was then purified by diluting 281g of material with 141g deionized water and removing excess solvents through an ultrafiltration process to yield a 18.37 wt% pigment solids dispersion that has less than 1.0 wt% of solvent (other than water), and an average particle size of 79 nm.

### Dispersion Preparation 5 - Magenta Dispersion (PD5)

An aqueous magenta pigment dispersion was prepared by mixing the following ingredients with adequate stirring:

| INGREDIENT | AMOUNT (G) |
|---|---|
| Polymer (from 2b) | 192.35 |
| Potassium hydroxide (45.0 % solids) | 9.85 |
| Deionized water | 217.81 |
| Triethyleneglycol monobutyl ether | 180.00 |

This produced a neutralized polymer solution at 15% nominal polymer solids . The balance of the dispersion was prepared by mixing the following ingredients with an HSD for 2 hrs at 4000 rpm:

| INGREDIENT | AMOUNT (G) |
|---|---|
| 15% Polymer solution | 200 |
| Deionized water | 323.5 |
| Magenta Pigment (Clariant Hostaperm Pink E-WD) | 75.0 |
| Proxel® GXL | 3.7 |

This was mixed and then dispersed 4 hours using a media mill. Then 200g of the above mixture was diluted with 100.0g of deionized water and purified by ultrafiltration to yield a 17.74 wt% pigment solids dispersion with an average particle size of 138 nm.

### Dispersion Preparation 6 - Black Dispersion (PD6)

The dispersion was prepared with the following recipe:

| INGREDIENT | AMOUNT (G) |
|---|---|
| Polymer (from 1c) | 84.04 |
| Lithium Hydroxide (98% solid) | 1.73 |
| Deionized water | 335.53 |
| Carbon Black (FW-18 Degussa) | 75 |
| Proxel® GXL | 3.7 |

These ingredients were well mixed and dispersed with a Microfluidics System to yield a 15 wt% pigment solids dispersion with average particle size of 95nm.

### Dispersion Preparation 7 - Black Dispersion (PD7)

The dispersion was prepared with the following recipe:

| INGREDIENT | AMOUNT (G) |
|---|---|
| Polymer (from 2b) | 80.14 |
| Lithium Hydroxide (98% solid) | 1.43 |
| Deionized water | 140 |
| Carbon Black (FW-18 Degussa) | 75 |
| Proxel® GXL | 3.7 |
| Dowanol® DPM | 319.73 |

The listed ingredients were well mixed and then dispersed using a Microfluidics system. Above was then diluted with 138 g of water and dispersed again with a Microfluidics system to yield a 10 wt% pigment solids dispersion with an average particle size of 119nm.

### Dispersion Preparation 8 - Black Dispersion (PD8)

The dispersion was prepared with the following recipe:

| INGREDIENT | AMOUNT (G) |
|---|---|
| Polymer (from 3b) | 85.36 |
| Lithium Hydroxide (98% solid) | 1.07 |
| Deionized water | 250 |
| Carbon Black (FW-18 Degussa) | 75 |
| Proxel® GXL | 3.7 |
| Dowanol® DPM | 334.87 |

The listed ingredients were well mixed and then dispersed using a Microfluidics System to yield a 10 wt% pigment solids dispersion with average particle size of 200nm.

### Dispersion Preparation 9 - Cyan Dispersion (PD()

The dispersion was prepared with the following recipe:

| INGREDIENT | AMOUNT (GM) |
|---|---|
| Polymer (from 2b) | 77.8 |
| Potassium hydroxide (45.0 % solids) | 3.86 |
| Deionized water | 347.87 |
| Sunfast Chemical Sunfast 15:4 | 90.0 |
| Butyl carbitol | 78.0 |

The Sun Chemical Sunfast Blue 15:4 was initially processed in an HSC followed by grinding in a horzontal media mill with 0.6-0.8 mm zirconia (ZrO₂) media. After the dispersion was complete, the fluid was ultrafiltered to remove solvents.

### Dispersion Preparation 10 - Magenta Dispersion (PD10)

Clariant Hostaperm Pink E-WD (R-122) chip was prepared in a manner similar to Dispersion Preparation 2. The chip was processed in a HSD with 15 % butyl carbitol and at about 20 % solids, then media milled with zirconia media. The dispersion was let down in water to lower solids. The resulting dispersion was ultrafiltered to remove the solvents.

### Dispersion Preparation 11 - Magenta Dispersion (PD11)

An aqueous magenta pigment dispersion was prepared by mixing the following ingredients with adequate stirring:

| INGREDIENT | AMOUNT (GM) |
|---|---|
| Polymer (from 14b) | 77.8 |
| Potassium hydroxide (45.0 % solids) | 4.86 |
| Deionized water | 133.26 |
| Clariant E02 | 90.0 |
| TEB (Dow) | 54.2 |

This was dispersed in a HSD for 2 hours at 3000 rpm. 49.1 grams of let down water was added. The dispersion was further dispersed using a Eiger mill with 0.5 mm nylon media. 60 grams of water was added during the milling for viscosity and temperature control. 130.9 grams of let down water was used. The dispersion was ultrafiltered to obtain dispersion with 12 % pigment solids. After ultrafiltration, 0.25 % Proxel® GXL was added.

### Dispersion Preparations 12, 13 and 14 - Black Dispersions (PD12, PD13 and PD14)

The following ingredients were mixed on a HSD then dispersed with Microfluidics media mill to yield a 15 wt% pigment solids dispersion with an average particle size indicated below.

| | | | |
|---|---|---|---|
| Dispersions | 12 | 13 | 14 |
| | | | |
| Polymer Type | 11b | 10b | 12b |
| | | | |

| | Amounts | | |
|---|---|---|---|
| Polymer | 83.69 | 82.31 | 83.69 |
| TEB (Dow) | 37.5 | 15.75 | 31.5 |
| (Triethylene glycol monobutylether) | | | |
| Phosphoric Acid | 4 | | 6.16 |
| (p-Toluenesulfonic acid, Monohydrate,crystal) | | 8.31 | |
| Deionized water | 298.56 | 417.38 | 304.25 |
| Carbon Black (Degussa Nipex 180IQ) | 75 | 75 | 75 |
| Benzoic Acid | 1.25 | 1.25 | 1.25 |
| | | | |
| Average Particle Size of dispersion, nm | 100 | 132 | 100 |

### Comparison Dispersion Preparation 1 - Black Dispersion (CDP1)

An aqueous black pigment dispersion was prepared by mixing the following ingredients with adequate stirring:

| INGREDIENT | AMOUNT (G) |
|---|---|
| Polymer (from CP1) | 93.75 |
| Potassium hydroxide (45.0 % solids) | 10.60 |
| Deionized water | 316.95 |
| Carbon black (FW-18 Degussa) | 75.0 |
| Proxel® GXL | 3.7 |

This was mixed and then dispersed using a mill from Microfluidics to yield 15.0 wt% pigment solids dispersion with an average particle size of 97 nm.

### Comparison Dispersion Preparation 2 - Magenta Dispersion (CDP2)

An aqueous magenta pigment dispersion was prepared by first milling the following ingredients on a 2 roll mill.

| INGREDIENT | AMOUNT (G) |
|---|---|
| Polymer (from CP2) | 275.59 |
| Magenta pigment (Monastral RT-355-D CIBA) | 210.0 |
| Tetraethylene glycol | 52.5 |

This was milled and made a magenta dispersion in a chip form that was 90.0 wt% solids. This was then let down by first mixing the following ingredients:

| INGREDIENT | AMOUNT (G) |
|---|---|
| Magenta chip | 167.24 |
| Potassium hydroxide (45.0 % solids) | 18.08 |
| Deionized water | 482.14 |
| Proxel® GXL | 1.50 |

Then, the dispersion was mixed in a high speed disperser for 4 hours at 3000 rpm to generate 14.09 wt% pigment solids dispersion.

### Comparison Dispersion Preparation 3 - Self-Dispersed Black Pigment (CDP3)

Prepared by methods described in previously incorporated WO0194476A2, Example 3.

### Inkjet Ink Example 1

An ink was prepared by mixing the following ingredients with adequate stirring:

| INGREDIENT | AMOUNT (G) |
|---|---|
| PD1 | 33.33 |
| Glycerol | 2.50 |
| Surfynol® 465 | 0.45 |
| Deionized water | 13.72 |

This made an ink that contained 5.0 wt% pigment.

### Inkjet Ink Example 2

An Ink was prepared by mixing the following ingredients with adequate stirring:

| INGREDIENT | AMOUNT (G) |
|---|---|
| PD11 | 33.1 |
| 1,2-hexanediol | 4 |
| Glycerol | 15 |
| Ethylene glycol | 5 |
| Surfynol® 465 | 0.5 |
| 2-pyrrolidone | 3 |
| Deionized water | 44.2 |

This made an ink that contained 4.0 wt% pigment.

### Inkjet Ink Example 3

An Ink was prepared by mixing the following ingredients with adequate stirring:

| INGREDIENT | AMOUNT (G) |
|---|---|
| PD9 (KOH neutralized) | 11.1 |
| 1,2-hexanediol | 4 |
| Glycerol | 15 |
| Ethylene glycol | 5 |
| Surfynol® 465 | 0.5 |
| 2-pyrrolidone | 3 |
| Deionized water | 61.4 |

This made an ink that contained 1.9 wt% pigment.

Other ink jet inks were prepared using similar procedures. The compositions are listed in the footnotes in the tables that follow describing the properties and print results for the ISD's.

### Comparison Ink 1

An ink was prepared by mixing the following ingredients with adequate stirring:

| INGREDIENT | AMOUNT (G) |
|---|---|
| CDP1 | 16.67 |
| Glycerol | 2.50 |
| Surfynol® 465 | 0.45 |
| Dowanol® DPM | 8.33 |
| Deionized water | 22.5 |

This made an ink that contained 5.0 wt% pigment.

### Salt Stability Test

The procedure for testing polymeric dispersions and inks used in these Examples is described below.
(a) Prepare salt solutions by diluting a stock solution (for example a 0.2 molar NaCl) with deionized water.
(b) To a glass vial (19mm X 65 mm vials with caps), add 1.5 g (ml) of salt solution with a disposable transfer pipette. (Pipette used was a SAMCO Transfer Pipette, cat #336 B/B-PET, Samco Scientific Corp, San Fernado, CA).
(c) Add test solution with the transfer pipette. One drop is used for dispersion concentrates. Three drops are used for ink samples.
(d) Mix the vial thoroughly with gentle swirling.
(e) Allow mixture to sit, undisturbed, for 24 hours at room temperature.
(f) Record visual observation of each sample.

- Rating of 3: complete settling of pigment; transparent, uncolored liquid at top.
- Rating of 2: no transparent uncolored liquid layer; definite settling onto bottom of vial observed when vial is tilted.
- Rating of 1: no transparent uncolored liquid layer; very slight settling (small isolated spots) as observed during tilting of vial.
- Rating of 0: no evidence of any settling.

### Printing of the Test Samples

The printing of the test examples was done in the following manner unless otherwise indicated. The printing for the ISD inks was done on an Epson 980 printer (Epson America Inc, Long Beach, Calif.) using the black printhead which has a nominal resolution of 360 dots per inch. The printing was done in the software-selected standard print mode. The optical density and chroma were measured using a Greytag-Macbeth SpectoEye instrument ( Greytag-Macbeth AG, Regensdorf, Switzerland). Plain paper OD values are the average of readings from prints made on three different plain papers: Hammermill Copy Plus paper, Hewlett-Packard Office paper and Xerox 4024 paper. The glossy paper results are from prints made using Epson Glossy Photo Paper. Gloss was measured using a BYK-Gardner Micro-Tri-Gloss gloss meter (Gardner Co., Pompano Beach, Florida).

### Tests of Polymeric Dispersions and Inks

For the ISD's, the ratio of hydrophilic and hydrophobic compositions is shown in the tables. For each of the entries the polymeric dispersants were prepared by the examples given above or very similar synthetic methods. Likewise, the dispersions and inks were prepared by the procedures described above. For the random polymers, the weight ratios of the monomer components are used; for the block polymers the molar ratios of the monomer components are used.

Table 1 shows salt stability testing for ISD polymeric dispersants with carbon black pigments. For each of these polymeric dispersants the stable dispersion was prepared in a manner similar to DP1. The pigment was carbon black. Results for an SDP dispersant and an ink with a conventional dispersant are also shown.

**Table 1 Ionically Stabilized Dispersions: Salt test**

| Salt Molarity, NaCl | | | | | | | | | | | | |
|---|---|---|---|---|---|---|---|---|---|---|---|---|
| Polymer | Synthetic example | 0 | 0.02 | 0.04 | 0.06 | 0.08 | 0.10 | 0.12 | 0.14 | 0.16 | 0.18 | 0.2 |
| 90/10 | 1c | 0 | 0 | 0 | 0 | 0 | 1 | 1 | 1 | 2 | 2 | 3 |
| 92/8 | 2b | 0 | 1 | 1 | 1 | 1 | 2 | 2 | 2 | 2 | 3 | 3 |
| 94/6 | 3b | 0 | 0 | 0 | 2 | 2 | 3 | 3 | 3 | 3 | 3 | 3 |
| 1//5 | 6b | 0 | 0 | 1 | 2 | 2 | 3 | 3 | 3 | 3 | 3 | ND |
| 8//10//8 | 4b | 0 | 0 | 1 | 2 | 2 | 2 | 2 | 3 | 3 | 3 | 3 |
| SDP | see note 1 | 0 | 0 | 0 | 0 | 2 | 3 | 3 | 3 | 3 | 3 | 3 |
| Conventional Dispersant | see note 2 | 0 | 0 | 0 | 0 | 0 | 1 | ND | ND | ND | ND | 1 |
| Note 1 | SDP | Self Dispersed Pigment, prepared in manner similar to Example 1, W00194476A2 | | | | | | | | | | |
| Note 2 | Conventional Dispersant | ETEGMA//BZMA//MAA Dispersant prepared according to Comparison Polymer 1 | | | | | | | | | | |

| | | | | | | | | | | | | |
|---|---|---|---|---|---|---|---|---|---|---|---|---|
| ND: Not Determined | | | | | | | | | | | | |

The results in Table 1 shows that the 5 ISD polymers, when formulated with black pigment, meet the salt test criteria for the invention. Comparing the 90/10, 92/8 and 94/6 ISD's, the hydrophilic component decreases in this set and the salt stability test indicates that the polymeric dispersant will precipitate at lower salt concentrations. The SDP material also meets the salt test criteria, but does not have a polymeric dispersant present. The Conventional Dispersant is a typical commercial formulation for pigments for ink. Note that the Conventional Dispersant does not meet the invention criteria for the salt stability test. That is, at high salt concentrations the dispersion does not precipitate after 24 hours.

Using the salt stability test on inks can show that the ink systems that include polymeric dispersants do not satisfy the invention's salt stability criteria. Inks from Seiko Epson and other common inks are tested and the results are listed in Table 2. The commercial inks were used as is. Other comparative dispersions and inks are also shown in the table.

**Table 2: Salt Stability Test: Common Commercial Inkjet Inks**

| | Salt Molarity, NaCl | | | | | | | | | | | |
|---|---|---|---|---|---|---|---|---|---|---|---|---|
| | 0 | 0.1 | 0.2 | 0.3 | 0.4 | 0.5 | 0.6 | 0.7 | 0.8 | 0.9 | 1.0 | 2.0 |
| C82 C | 0 | 0 | 0 | 0 | 2 | 2 | 3 | 3 | 3 | 3 | 3 | 3 |
| C82 M | 0 | 1 | 3 | 3 | 3 | 3 | 3 | 3 | 3 | 3 | 3 | 3 |
| C82 Y | 0 | 0 | 0 | 1 | 2 | 3 | 3 | 3 | 3 | 3 | 3 | 3 |
| C80 K | 0 | 2 | 2 | 3 | 3 | 3 | 3 | 3 | 3 | 3 | 3 | 3 |
| C80 C | 0 | 0 | 0 | 0 | 0 | 1 | 2 | 3 | 3 | 3 | 3 | 3 |
| C80 M | 0 | 0 | 0 | 0 | 2 | 2 | 3 | 3 | 3 | 3 | 3 | 3 |
| C80 Y | 0 | 0 | 0 | 0 | 0 | 1 | 1 | 2 | 2 | 2 | 3 | 3 |
| 2000P K | 0 | 0 | 0 | 0 | 0 | 2 | 2 | 2 | 2 | 2 | 2 | 2 |
| 2000P C | 0 | 0 | 0 | 0 | 0 | 0 | 1 | 2 | 2 | 3 | 3 | 3 |
| 2000P M | 0 | 0 | 0 | 1 | 2 | 2 | 3 | 3 | 3 | 3 | 3 | 3 |
| 2000P Y | 0 | 0 | 0 | 0 | 0 | 0 | 0 | 0 | 0 | 0 | 0 | 0 |
| Conventional dispersed ink | 0 | 0 | 0 | 0 | 0 | 0 | 0 | 0 | 0 | 0 | 1 | 1 |
| Magenta; SDP as dispersed pigment | 0 | 1 | 2 | 3 | 3 | 3 | 3 | 3 | 3 | 3 | 3 | 3 |
| Magenta; SDP as dispersed pigment in ink formulation | 0 | 2 | 3 | 3 | 3 | 3 | 3 | 3 | 3 | 3 | 3 | 3 |
| SDP Black tested as dispersion | 0 | 3 | 3 | 3 | 3 | 3 | 3 | 3 | 3 | 3 | 3 | 3 |
| Cab-o-jet 300 tested as dispersion | 0 | 3 | 3 | 3 | 3 | 3 | 3 | 3 | 3 | 3 | 3 | 3 |
| | | | | | | | | | | | | |
| Notes: tested materials | | | | | | | | | | | | |
| C82, C80 and 2000P are commercially available inks for these Seiko Epson Corporation commercial printers | | | | | | | | | | | | |
| Conventional dispersed ink ETEGMA//BZMA//MAA Dispersant prepared according to Comparison Polymer 1 | | | | | | | | | | | | |
| Magenta SDP: Made in manner similar to Example 13, WO0194476A | | | | | | | | | | | | |
| SDP: Self-Dispersed Pigment, prepared in manner similar to Example 1,WO0194476A | | | | | | | | | | | | |
| Cab-o-Jet 300: self-dispersed black from the Cabot Corporation tested as dispersed pigment | | | | | | | | | | | | |

The Magenta SDP ink had the following composition:

| | |
|---|---|
| Magenta pigment | 8 |
| Binder | 3 |
| 1,2-hexane diol | 3 |
| Glycerol | 16 |
| BYK-348 | 0.5 |
| Surfactant | |
| Triethanolamine | 0.5 |
| EDTA | 0.05 |
| DI water | 68.94 |

The binder was a BZMA/HEMA/MAA/64/30/6; Mn = 5000; 85 % neutralized with KOH; 20% solids.

Table 2 shows that commercial inks containing conventional dispersants are stable according to the salt stability test. For the C82 and C80 black entries note that these are both indicated to be self dispersed and as such fail the salt stability test according to the invention criteria, as they do not contain polymeric dispersants. Thus, these SDP's do not match the criteria of the invention.

ISD's also can be used with other pigments such as magenta. The formulation of the pigment dispersions for these tests was similar to that listed in DP2. The magenta pigment used was RT355-D supplied by Ciba.

**Table 3: Salt Stability Test of Magenta Dispersions**

| | | | | Salt Molarity, NaCl | | | | | | |
|---|---|---|---|---|---|---|---|---|---|---|
| Polymer | 0 | 0.02 | 0.04 | 0.06 | 0.08 | 0.1 | 0.12 | 0.14 | 0.16 | 0.18 |
| 90/10 | 0 | 0 | 0 | 0 | 0 | 1 | 1 | 1 | 2 | 2 |
| 92/8 | 0 | 0 | 0 | 0 | 0 | 0 | 0 | 0 | 2 | 2 |
| 94/6 | 0 | 0 | 0 | 2 | 2 | 3 | 3 | 3 | 3 | 3 |
| 1//5 | 0 | 0 | 0 | 2 | 2 | 3 | 3 | 3 | 3 | 3 |
| 8//10//8 | 0 | 0 | 0 | 0 | 1 | 1 | 1 | 2 | 2 | 2 |

All polymer formulations were based on the 'a' formulation, that is 1a, 2a, 3a, 6a, and 5a respectively.

With magenta as the pigment, the ISD's listed in Table 3 all have salt stability ratings of 2 or higher at 0.16 molar salt solution. Thus, each of these systems satisfy the criteria for the ISD invention. Note that the 94/6 and the 1//5 material have nearly the same salt stability rating.

Media milling is an optional milling process to produce the ISD dispersions. Table 4 shows the results of several ISD polymers that have been media milled. The pigment is a magenta pigment.

**Table 4: Salt Stability of Media Milled Magenta Pigment: PR-122 Pink EWD**

| | Process: Media milled | | | | | | | | | | |
|---|---|---|---|---|---|---|---|---|---|---|---|
| | Salt Molarity, NaCl | | | | | | | | | | |
| Polymer | 0 | 0.02 | 0.04 | 0.06 | 0.08 | 0.1 | 0.12 | 0.14 | 0.16 | 0.18 | 0.18 |
| 90/10 | 0 | 0 | 0 | 0 | 0 | 0 | 0 | 2 | 3 | 3 | 3 |
| 92/8 | 0 | 0 | 0 | 0 | 0 | 2 | 3 | 3 | 3 | 3 | 3 |
| 94/6 | 0 | 0 | 0 | 3 | 3 | 3 | 3 | 3 | 3 | 3 | 3 |
| Comparison Polymer 2 | 0 | 0 | 0 | 0 | 0 | 0 | 0 | 0 | 0 | 0 | 0 |

All polymer formulations were based on the 2-pyrrolidone formulation, that is 1 c, 2b and 3b respectively.

Media milling is one of the options to produce the ISD dispersions.

ISD's can also be used with yellow pigments and with a variety of pigment dispersion preparation conditions. The salt stability of these dispersions is shown in Table 5.

**Table 5: Salt Stability test with Yellow Pigments and with Different Processing Conditions**

| | NaCl Molarity | | | | | | | | | | | |
|---|---|---|---|---|---|---|---|---|---|---|---|---|
| Sample | 0 | 0.02 | 0.04 | 0.06 | 0.08 | 0.1 | 0.12 | 0.14 | 0.16 | 0.18 | 0.2 | 0.3 |
| ISD 92/8, 2b; | 0 | 0 | 0 | 0 | 0 | 0 | 0 | 0 | 0 | 0 | 0 | 0 |
| Y-74 pigment; | | | | | | | | | | | | |
| media milled | | | | | | | | | | | | |
| ISD 92/8;,2a | 0 | 0 | 0 | 0 | 0 | 0 | 0 | 2 | 3 | 3 | 3 | 3 |
| Y-155 pigment; | | | | | | | | | | | | |
| 2RM/MM/UF | | | | | | | | | | | | |
| ISD 92/8, 2a; | 0 | 0 | 0 | 0 | 0 | 0 | 0 | 0 | 0 | 0 | 2 | 3 |
| Y-155 pigment; | | | | | | | | | | | | |
| 2RM/MM/UF/HT | | | | | | | | | | | | |
| ISD 94/6,3a; | 0 | 0 | 0 | 2 | 3 | 3 | 3 | 3 | 3 | 3 | 3 | 3 |
| Y-155 pigment; | | | | | | | | | | | | |
| 2RM/MM/UF | | | | | | | | | | | | |
| | | | | | | | | | | | | |
| Notes: 2RM, 2 Roll Milled; MM, Media Milled with YTZ; UF, ultrafiltered; HT, heat treated | | | | | | | | | | | | |

The Yellow Pigment, Y-155 prepared under a variety of conditions, produces pigment dispersions that when tested using the salt stability test precipitate with 0.2 molar salt solution. The Y-74 pigment dispersion, with this formulation, inexplicably did not show precipitation.

ISD's can also be used with cyan pigments. The cyan dispersion preparations were made similar to DP3. The initial dispersion was further treated via UF (ultrafiltration), ultrasonication and in an oven (heat treatment). Table 6 shows salt stability test results for cyan pigments.

**Table 6: Salt Stability test with Cyan Pigments and with Different Processing Conditions**

| | NaCl Molarity | | | | | | | | | |
|---|---|---|---|---|---|---|---|---|---|---|
| Description/salt test solution | 0 | 0.02 | 0.04 | 0.06 | 0.08 | 0.1 | 0.12 | 0.14 | 0.16 | 0.18 |
| Initial as 94/6; ISD¹ | 0 | 0 | 0 | 2 | 3 | 3 | 3 | 3 | 3 | 3 |
| UF | 0 | 0 | 0 | 2 | 2 | 3 | 3 | 3 | 3 | 3 |
| UF and Ultrasonicated+Oven | 0 | 0 | 0 | 0 | 2 | 3 | 3 | 3 | 3 | 3 |
| | | | | | | | | | | |
| Initial as 92/8 ISD¹ | 0 | 0 | 0 | 0 | 2 | 2 | 3 | 3 | 3 | 3 |
| UF | 0 | 0 | 0 | 0 | 0 | 2 | 2 | 3 | 3 | 3 |
| UF and Ultrasonicated+Oven | 0 | 0 | 0 | 0 | 0 | 0 | 2 | 2 | 3 | 3 |

| | | | | | | | | | | |
|---|---|---|---|---|---|---|---|---|---|---|
| ¹ For the 92/8 ISD Dispersion Preparation 3 was used; for 94/6 Dispersion Preparation was similar to Dispersion Preparation 3 except that the 94/6 polymer 3a was used. | | | | | | | | | | |

The salt stability tests of these cyan formulations all have stability that meet the invention criteria. Both UF and sonication/heating change the salt stability somewhat, but still meet the invention criteria.

Joncryl® 611 (Johnson Polymers, Sturtevant, WI) when used as an ISD meets the salt stability invention criteria. It was tested with two magenta pigments in formulations similar to DP2 and DP5. This resin is described by Johnson Polymer as a 'mid-range molecular weight resin, designed for ... in solvent based fluid inks and overprint varnishes'. Johnson Polymers do not recommend this resin for the aqueous dispersions. For this Joncryl® sample, the acid number was 53 and the Mn was 8100, and the polymer is derived from acrylics.

**Table 7: Salt Stability Test with Magenta Pigment and an ISD Derived from Joncryl® 611.**

| | Salt Molarity, NaCl | | | | | | | | | | | |
|---|---|---|---|---|---|---|---|---|---|---|---|---|
| | 0 | 0.02 | 0.04 | 0.06 | 0.08 | 0.1 | 0.12 | 0.14 | 0.16 | 0.18 | 0.2 | 0.3 |
| ISD: Joncryl® | 0 | 0 | 0 | 0 | 0 | 0 | 0 | 0 | 2 | 3 | 3 | 3 |
| 611, Pink EWD | | | | | | | | | | | | |
| ISD: Joncryl® | 0 | 0 | 2 | 3 | 3 | 3 | 3 | 3 | 3 | 3 | 3 | 3 |
| 611, Red RT | | | | | | | | | | | | |
| 355D | | | | | | | | | | | | |

Inks prepared using the ISD's generally result in improved optical density and chroma. Black Inks were prepared by using the vehicles and ISD's listed in Table 8. Optical Density was tested on 3 different types of plain paper. All polymer formulations were based on the 2-pyrrolidone formulation, that is 1 c, 2b, 3b and 4b respectively.

**Table 8: ISD Formulations with Black Pigment**

| Black Pigment: Degussa Nipex 160 | | Optical Density | | | |
|---|---|---|---|---|---|
| Polymer used in Dispersion and ink preparation | Pigment Concentration | Hammer mill Copy Plus | Xerox 4024 | HP Office | Average |
| 90/10 BZMA/MAA; Vehicle 1 | 6% | 1.14 | 1.14 | 1.21 | 1.16 |
| 90/10 BZMA/MAA; Vehicle 2 | 3% | 1.11 | 1.06 | 1.15 | 1.11 |
| 92/8 BZMA/MAA; Vehicle 2 | 6% | 1.30 | 1.34 | 1.25 | 1.30 |
| 92/8 BZMA/MAA; Vehicle 2 | 3% | 1.48 | 1.46 | 1.36 | 1.43 |
| 94/6 BZMA/MAA; Vehicle 2 | 3% | 1.37 | 1.36 | 1.29 | 1.34 |
| 8//10//8 BZMA//MAA//BZMA; Vehicle 1 | 6% | 1.08 | 1.10 | 1.11 | 1.10 |
| | | | | | |
| ETEGMA//BZMA//MAA (Comparison) Vehicle 2 | 6% | 1.02 | 1.14 | 1.12 | 1.09 |
| ETEGMA//BZMA//MAA (Comparison) Vehicle 2 | 3% | 0.91 | 0.88 | 0.98 | 0.92 |
| SDP (Comparison) Vehicle 2 | 6% | 1.30 | 1.26 | 1.27 | 1.28 |
| SDP (Comparison) Vehicle 2 | 3% | 1.33 | 1.31 | 1.31 | 1.32 |
| | | | | | |
| Vehicle Formulation | # 1 | # 2 | | | |
| 1,2-hexanediol | 4% | 4% | | | |
| Glycerol | 15% | 10% | | | |
| Ethylene glycol | 1% | 5% | | | |
| Triethanolamine | 0.20% | 0% | | | |
| Surfynol® 465 | 0.90% | 0.20% | | | |
| 2-pyrrolidone | 3% | 3% | | | |

| | | | | | |
|---|---|---|---|---|---|
| ETEGMA//BZMA//MAA Dispersant was prepared according to CP 1. SDP: Self Dispersed Pigment, prepared in manner similar to Example 1, of previously incorporated WO0194476A. | | | | | |

The ISD formulated inks have significantly better optical density than comparison inks. For the series of ISDs 90/10, 92/8, and 94/6, the optical density improves as the hydrophilicity decreases. For both the 92/8 and 94/6 ISDs, the optical density is better at both 3 and 6% loading.

Ink formulations based on ISD's with magenta pigments lead to improved optical density and chroma. All dispersions made with 'a' polymer formulations in a manner similar to DP 2.

**Table 9: ISD Formulations with Magenta Pigments**

| Dispersant | Pigment | P/D | Plain Paper OD | | Chroma | |
|---|---|---|---|---|---|---|
| | | | 1.75% | 3% | 1.75% | 3% |
| | | | Pigment | Pigment | Pigment | Pigment |
| 90/10 | Ciba RT-355D | 4.00 | 0.73 | 0.94 | 53.3 | 59.4 |
| 90/10 | Clariant Hostaperm Pink | 2.50 | 0.86 | 1.03 | 60.3 | 63.7 |
| 94/6 | Ciba RT-355D | 4.00 | 0.78 | 0.97 | 55.7 | 60.5 |
| 94/6 | Clariant Hostaperm Pink | 2.50 | 0.86 | 1.07 | 61 | 65.6 |
| 8//10//8 | Ciba RT-355D | 4.00 | 0.7 | 0.85 | 52.5 | 56.3 |
| 8//5//8 | Ciba RT-355D | 4.00 | 0.74 | 0.91 | 54.1 | 58.5 |
| 92/8 | Clariant Hostaperm Pink | 2.50 | 0.87 | 1.07 | 61.5 | 65.1 |
| 1//5 | Clariant Hostaperm Pink | 2.50 | 0.85 | 1.01 | 60.1 | 63.7 |
| | | | | | | |
| Ink from Comp. Polymer 2 | Ciba RT-355D | Unkno wn | 0.7 | 0.83 | 51 | 55 |
| | | | | | | |
| Vehicle Formulation | | | | | | |
| 1,2-hexanediol | 4.00% | | | | | |
| Glycerol | 15% | | | | | |
| Ethylene glycol | 5% | | | | | |
| Surfynol® 465 | 0.20% | | | | | |
| 2-pyrrolidone | 3% | | | | | |
| | | | | | | |
| Plain paper results are average of Hammermill Copy Plus, Xerox 4024 and HP Office | | | | | | |
| Everything printed on Epson 980; using the black ink cartridge | | | | | | |

The ISD formulated inks have significantly better optical density and chroma than comparison inks. For the series of ISDs 90/10, 92/8 and 94/6, the optical density and chroma improved as the hydrophilicity decreased.

Inks were prepared with the ISD 92/8 was formulated with yellow pigment and tested. The ink vehicle was identical to the one listed in Table 9. The dispersions were prepared by the two roll mill (2RM) process. These were compared to commercially available color printed materials from Cabot, Epson, Canon and HP.

**Table 10: ISD Formulations with Yellow Pigment**

| Optical Density | | | | | | |
|---|---|---|---|---|---|---|
| %Pigment | Conventional dispersant comparison | 92/8, ( 2a) 2RM | Cabot SDP | Epson C82 | Canon S750 | Hp Photosmart 7150 |
| 1.7 | 0.75 | 1.03 | 0.7 | | | |
| 3 | 0.91 | 1.2 | 1 | | | |
| 6 | 0.89 | 1.23 | 1.05 | | | |
| Unknown Pigment concentration | | | | 1.2 | | |
| Colorant is a dye | | | | | 0.91 | 1.01 |

| Chroma | | | | | | |
|---|---|---|---|---|---|---|
| 1.7 | 65.4 | 80.8 | 58.5 | | | |
| 3 | 74 | 90.1 | 76.3 | | | |
| 6 | 73.6 | 90 | 81 | | | |
| Unknown Pigment concentration | | | | 89.7 | | |
| Colorant is a dye | | | | | 66.8 | 68 |
| | | | | | | |
| Conventional dispersant: Pigment, Ciba, Cromophtal Yellow 131 AK; Polymer/Dispersant, 1.5 | | | | | | |
| BZMA//MAA 13/10; 2-pyrrolidone, 10 %; EDTA, 0.21 | | | | | | |
| Paper: Hammermill Copy Plus | | | | | | |

The ISD with yellow pigment showed significantly better chroma and optical density than commercial samples. Both the chroma and optical density improved with higher pigment loadings.

A 92/8 magenta ink formulation was tested along with several commercially available ink jet inks. The ISD material was tested at 3 different pigment loadings. The printed paper was tested for optical density and chroma and the results are listed in Table 11. The ink vehicle was identical to the one listed in Table 9.

**Table 11: ISD Formulations with Magenta Pigment**

| Optical Density | | | | | | |
|---|---|---|---|---|---|---|
| %Pigment | Conventional dispersant comparison | 92/8, (2a) 2RM | Cabot SDP | Epson C82 | Canon S750 | Hp Photosmart 7150 |
| 1.7 | 0.78 | 1.08 | 0.82 | | | |
| 3 | 0.89 | 1.29 | 0.91 | | | |
| 6 | 1.01 | | 0.98 | | | |
| Unknown Pigment concentration | | | | 1.1 | | |
| Colorant is a dye | | | | | 1.06 | 1.01 |

| Chroma | | | | | | |
|---|---|---|---|---|---|---|
| 1.7 | 56.9 | 64.4 | 53.9 | | | |
| 3 | 57.1 | 69.4 | 55.4 | | | |
| 6 | 55.5 | 68.8 | 55.9 | | | |
| Unknown Pigment concentration | | | | 64.8 | | |
| Colorant is a dye | | | | | 65.1 | 61.1 |
| | | | | | | |
| Conventional dispersant comparison is the same as the one shown in Table 10 | | | | | | |
| Pigment used was Monastral RT-355-D from Ciba | | | | | | |
| Paper: Xerox 4024 | | | | | | |

The ISD with magenta pigment showed significantly better chroma and optical density than commercial samples. Both the chroma and optical density improved with higher pigment loadings.

A 92/8 cyan ink formulation was tested along with several commercially available ink jet inks. The ISD material was tested at 3 different pigment loadings. The printed paper was tested for optical density and chroma. The ink vehicle was identical to the one listed in Table 9.

**Table 12: ISD Formulations with Cyan Pigment**

| Optical Density | | | | | | |
|---|---|---|---|---|---|---|
| %Pigment | Conventional dispersant comparison | 92/8, (2a) 2RM | Cabot SDP | Epson C82 | Canon S750 | Hp Photosmart 7150 |
| 1.7 | 0.81 | 1.08 | 0.82 | | | |
| 3 | 0.89 | 1.29 | 0.91 | | | |
| 6 | 1 | | 0.98 | | | |
| Unknown Pigment concentration | | | | 1.05 | | |
| Colorant is a dye | | | | | 1.12 | 1.02 |

| Chroma | | | | | | |
|---|---|---|---|---|---|---|
| 1.7 | 45.2 | 55.6 | 43.5 | | | |
| 3 | 46 | 58.1 | 42.1 | | | |
| 6 | 46.3 | | 40.6 | | | |
| Unknown Pigment concentration | | | | 50.6 | | |
| Colorant is a dye | | | | | 53.26 | 51.1 |
| | | | | | | |
| Conventional dispersant: Pigment, Aztech Chem. Cyan 1531; Polymer/Dispersant, 1.5 | | | | | | |
| BZMA//ETEGMA/MAA 13/7.5/13; 2-pyrrolidone, 10 % | | | | | | |

The ISD with cyan pigment showed significantly better chroma and optical density than commercial samples. Both the chroma and optical density improved with higher pigment loadings.

ISD pigment dispersions can be ultrafiltered to modify final dispersion properties and, in turn, improve print performance. Table 13 shows the comparison of 3 ISD ink formulations with magenta pigment. The 'a' form of the dispersants was used. Different pigment loadings and process conditions were used with and without ultrafiltration as the final dispersion processing step. The ink vehicle was identical to the one listed in Table 9.

**Table 13: ISD Formulations with Magenta Pigment Comparison of products with and without UF of the pigment**

| | | Optical Density | | Chroma | |
|---|---|---|---|---|---|
| Dispersant | Pigment, % | pre UF | UF | pre UF | UF |
| BzMA/MAA 90/10 | 1.7 | 0.91 | 0.91 | 62.1 | 61.7 |
| BzMA/MAA 90/10 | 3.0 | 1.10 | 1.13 | 65.2 | 66.3 |
| BzMA/MAA 90/10 | 6.0 | 1.19 | 1.29 | 62.7 | 66.5 |
| BzMA/MAA 92/8 | 1.7 | 0.87 | 0.89 | 60.8 | 61.5 |
| BzMA/MAA 92/8 | 3.0 | 1.12 | 1.17 | 66.0 | 68.3 |
| BzMA/MAA 92/8 | 6.0 | 1.18 | 1.33 | 62.9 | 68.0 |
| BzMA/MAA 94/6 | 1.7 | 0.87 | 0.91 | 60.3 | 62.6 |
| BzMA/MAA 94/6 | 3.0 | 1.12 | 1.17 | 33.4 | 67.9 |
| BzMA/MAA 94/6 | 6.0 | 1.19 | 1.35 | 63.1 | 66.4 |

Ultrafiltration of the ISD formulations improved the optical density. Chroma improved with higher loadings of pigment up to about 3 wt%, but there was some decline at higher loadings.

Stability of ISD pigment dispersions was demonstrated by testing a 92/8 (2a) formulation with a magenta pigment. Various stability parameters were tested by heating the dispersion in an oven at 70°C for 7 days. Before and after results are listed in Table 14.

**Table 14 Comparison of Oven Aged Ink Properties**

| | Fresh Ink Properties | | | | | | Oven Aged Properties 7days/70°C | | | | | |
|---|---|---|---|---|---|---|---|---|---|---|---|---|
| Pigment | pH | Conductivity | Viscosity | ST | Particle Size | | pH | Conductivity | Viscosity | ST | Particle Size | |
| % | | (us/cm) | (cps) | (dyne) | D50 | %<204 | | (us/cm) | (cps) | (dyne) | D50 | %<204 |
| 1.70% | 8.67 | 228 | 3.66 | 32.51 | 133.3 | 81.61 | 8.27 | 270 | 3.64 | 32.63 | 144.7 | 82.3 |
| 3.00% | 8.82 | 383 | 3.73 7 | 33.0 | 141.3 | 80.38 | 8.47 | 387 | 3.67 | 33.07 | 140.3 | 77.3 |
| 1.70 % | 8.62 | 147 | 3.42 | 32.32 | 148.1 | 80.49 | 8.25 | 184 | 3.32 | 32.17 | 145.7 | 81.74 |
| 3.00% | 8.74 | 243 | 3.24 | 32.73 | 136.6 | 77.71 | 8.32 | 299 | 3.22 | 32.58 | 140.8 | 91.41 |
| 6.00% | 8.86 | 378 | 4.48 | 33.12 | 145.6 | 80.7 | 8.52 | 466 | 4.24 | 33.09 | 136.3 | 82.14 |
| | | | | | | | | | | | | |
| Notes: | | | | | | | | | | | | |
| Pigment: Clariant Hostaperm Pink | | | | | | | | | | | | |
| ISD: BzMA/MAA 92/8 | | | | | | | | | | | | |
| Processing: Media Mill; Entries 3, 4 and 5 also ultrafiltered | | | | | | | | | | | | |
| Neutralizing agent: KOH | | | | | | | | | | | | |
| Solvent: 2-pyrrolidone: 6.9 %; TEB, 12.1 % | | | | | | | | | | | | |

The 92/8 formulation of magenta was judged stable in this accelerated aging test. The change in conductivity, viscosity, surface tension, particle size and pH all were in ranges that indicate a stable dispersion.

A yellow pigment in a 92/8 dispersion formulation was put in an oven and tested periodically for dispersion properties. This was prepared in a manner similar to DP4. The pigment was a Clariant Toner Yellow 3GP.

**Table 15 Dispersion Properties with Oven Aging**

| Days in oven @ 70°C | Conductivity (mS ) | pH | Viscosity, cps | Micro Trac d-50 | Micro Trac <204 |
|---|---|---|---|---|---|
| 0 | 1.85 | 9.51 | 256.70 | 102.30 | 96.10 |
| 1 | 1.95 | 9.40 | 24.00 | 100.00 | 97.52 |
| 4 | 2.50 | 9.29 | 8.46 | 91.60 | 96.18 |
| 7 | 2.38 | 9.16 | 7.58 | 94.50 | 97.79 |
| 14 | 1.93 | 9.00 | 7.16 | 83.00 | 97.39 |

While most of the properties vary within an acceptable variability, the viscosity was significantly reduced as the dispersion was heat treated. In parallel studies, the viscosity of a Aztech CY-7480 yellow dispersion went from 6.59 cps as made to 2.96 in 1 day of heat treatment. Magenta had similar modest drops from 7.36 cps to 5.1 after 1 day. Cyan had an intermediate viscosity drop of 17.8 as made to 6.14 after one day at 70°C.

Dispersions made with cationic ISDs also pass the salt stability test.

**Table 16: Cationic ISDs**

| Dispersion | 0 | 0.02 | 0.04 | 0.06 | 0.08 | 0.1 | 0.12 | 0.14 | 0.16 | 0.18 | 0.2 | 0.3 |
|---|---|---|---|---|---|---|---|---|---|---|---|---|
| 12 | 0 | 0 | 2 | 2 | 3 | 3 | 3 | 3 | 3 | 3 | 3 | 3 |
| 13 | 1 | 2 | 2 | 2 | 2 | 2 | 2 | 3 | 3 | 3 | 3 | 3 |
| 14 | 0 | 0 | 0 | 0 | 1 | 2 | 2 | 2 | 2 | 2 | 3 | 3 |

An inkset was prepared with polymer dispersant 2b. The dispersion composition, ink composition and results of printed are listed in Table 17a, b and c

**Table 17 ISD Dispersions**

| Dispersion Color | | Cyan | Magenta | Yellow |
|---|---|---|---|---|
| Pigment Name | | Aztech CC1531 | Clariant E-02 | Sunbrite Y74 272 |
| Dispersion P/D Ratio | | 2.5 | 2.5 | 3 |
| Neutralizing Agent | | KOH | KOH | KOH |
| Percent Neutralization | | 90% | 90% | 100% |
| Solvent (% @ %P) | | 15% BuC @ | 20% Dow TEB @ | 14.4% Dow TEB |
| | | 25% Pig | 25% Pig | @ 27% Pig |
| Process Information | | | | |
| Media (size/type) | | 0.5mm Nylon | 0.5mm Nylon | YTZ |
| Mill Type | | SM-2 | SM-2 | SM-2 |
| Ultrafiltration (Yes/No) | | Yes | Yes | No |
| Disp Phys Prop Data | | | | |
| Pigment Conc. (%) | | 10.30% | 16.15% | 14.65% |
| Viscosity @ 25°C (cP) | | 1.82 cP | 15.2 cP | 4.51 cP |
| Surface Tension | | 59.37 | 55.83 | 39.3 |
| pH | | 9.16 | 9.31 | 9.51 |
| Conductivity (mS) | | 1.17 | 1.96 | 1.16 |
| Particle Size (D₅₀, nm) | | 98.7 | 148.1 | 127 |
| | (D₉₅, nm) | 190.4 | 264.1 | 252.4 |
| | %<204 nm | 96.00% | 87.31% | 86.68% |

**Table 17b: Ink formulations**

| | Cyan | Magenta | Yellow |
|---|---|---|---|
| Ink Recipe | | | |
| Concentrate | 34.95 | 37.15 | 38.44 |
| Binder | 0.00 | 0.00 | 0.00 |
| Water | 109.55 | 107.44 | 106.06 |
| 1,2-hexanediol | 8.00 | 8.00 | 8.00 |
| Glycerol | 30.00 | 30.00 | 30.00 |
| Surfynol® 465 | 1.00 | 1.00 | 1.00 |
| Ethylene glycol | 10.00 | 10.00 | 10.00 |
| 2-pyrrolidone | 6.00 | 6.00 | 6.00 |
| Proxel® | 0.50 | 0.41 | 0.50 |

**Table 17c Ink Properties**

| | Optical Density | L | A | B | C | h |
|---|---|---|---|---|---|---|
| Cyan | 0.97 | 59.69 | -22.29 | -51.84 | 56.43 | 246.73 |
| Magenta | 0.96 | 59.45 | 63.86 | -17.01 | 66.09 | 345.08 |
| Yellow | 1.00 | 94.91 | -8.33 | 84.68 | 85.09 | 95.62 |

| | | | | | | |
|---|---|---|---|---|---|---|
| Measured by printing on Epson 980 in quality mode. | | | | | | |

Each of these inks was tested by the ink stability test, and each met the criteria of the test.

**Table 18: Salt Stability of Inks from ISD dispersions**

| NaCl Molarity | | | | | | | | | | | | |
|---|---|---|---|---|---|---|---|---|---|---|---|---|
| Sample | 0 | 0.02 | 0.04 | 0.06 | 0.08 | 0.10 | 0.12 | 0.14 | 0.16 | 0.18 | 0.20 | 0.30 |
| Cyan | 0 | 0 | 0 | 0 | 0 | 0 | 2 | 3 | 3 | 3 | 3 | 3 |
| Magenta | 0 | 0 | 0 | 2 | 3 | 3 | 3 | 3 | 3 | 3 | 3 | 3 |
| Yellow | 0 | 0 | 0 | 0 | 0 | 0 | 0 | 2 | 3 | 3 | 3 | 3 |

Polymer additives can be added to effectively improve performance of ink jet inks derived from ISD's. Inks were prepared with Polymer Additives and are indicated as ink examples PA.

### Inkjet Ink Examples PA-1

An ink was prepared by mixing the following ingredients with adequate stirring:

| INGREDIENT | AMOUNT (G) |
|---|---|
| DP11 | 33.1 |
| 1,2-hexanediol | 4 |
| Glycerol | 15 |
| Ethylene glycol | 5 |
| Surfynol® 465 | 0.5 |
| 2-pyrrolidone | 3 |
| PA1c | 6.7 |
| Deionized water | 37.5 |

### Inkjet Ink Examples PA-2

The same preparation was used except 6.7 g of PA2c was used instead of PA1c.

### Inkjet Ink Examples PA-3

The same preparation was used except 6.7 g of PA3c was used instead of PA1c.

### Inkjet Ink Examples PA-4

The same preparation was used except 2.3 g of PA4c and 4.4 g additional water were used instead of PA1 c.

### Inkjet Ink Examples PA-5

The same preparation was used except 6.7 g of Polymer Preparation 2d (15% polymer solid concentration) was used instead of PA1c. This was an example of using an ISD polymer both as the dispersing polymer and separately as an additive to improve the ink jet ink.

### Inkjet Ink Example PA-6

The same preparation was used except 5 g of KOH neutralized Comparison Polymer Preparation 1 (20% polymer solid concentration) and 1.7 g additional water were used instead of PA1c.

The final inks for Examples PA1 through PA6, each contained 4.0% pigment and 1% polymer additive solid. Each ink was printed using an Epson 980 ink jet printer through the magenta port on Hammermill Copy Plus office paper (HCP) and on Epson Premium Photo Glossy Paper (EPPGP). The optical density and gloss were measured as for Ink Jet Ink Example 2 and are shown in Table 19.

**TABLE 19**

| INKS | Gloss | Optical Density | Optical Density |
|---|---|---|---|
| | on EPPGP | On EPPGP | On HCP |
| Ink Jet Ink Example 2 | 63 | 1.73 | 0.93 |
| Ink Example PA1 | 97 | 2.04 | 0.91 |
| Ink Example PA2 | 86 | 1.80 | 0.90 |
| Ink Example PA3 | 107 | 2.25 | 0.95 |
| Ink Example PA4 | 87 | 1.92 | 0.94 |
| Ink Example PA5 | 99 | 2.28 | 0.90 |
| Ink Example PA6 | 97 | 2.20 | 0.96 |

Each of the Polymer Additives improved the gloss relative to when the ISD dispersion is used without polymeric additives.

The use of polymer additives can also improve thermal ink jet (TIJ) reliability and durability.

Ink jet ink with ink PA7 was compared to Ink Jet Ink 3

### Inkjet Ink Example PA-7

An Ink was prepared by mixing the following ingredients with adequate stirring:

| INGREDIENT | | AMOUNT (G) |
|---|---|---|
| DP9 | | 11.1 |
| 1,2-hexanediol | | 4 |
| Glycerol | | 15 |
| Ethylene glycol | | 5 |
| Surfynol® 465 | | 0.5 |
| 2-pyrrolidone | | 3 |
| Polymer Additive Solution | | 8.5 |
| | (20% polymer solid concentration | |
| | from polymer preparation Comp Polymer 1, | |
| | KOH neutralized) | |
| Deionized water | | 52.9 |

This made an ink that contained 1.9% pigment and 1.7% polymer additive solid. It was printed using an Hewlett Packard deskjet 6122 ink jet printer through the black port on Hammermill Copy Plus office paper (HCP) and on Epson Premium Photo Glossy Paper (EPPGP).

The optical density and gloss are shown in Table 20.

**TABLE 20**

| INKS | Gloss | Op. Density | Optical Density |
|---|---|---|---|
| | on EPPGP | On EPPGP | On HCP |
| Ink Jet Ink 3 | 70 | 1.97 | 1.09 |
| Ink Example PA7 | 87 | 2.09 | 0.84 |

As an illustration of the effect on printing reliability of the addition of polymer additives, the number of nozzles that did not sustain the printing of a recorded number of 7"x9" solid color blocks are shown in Table 21.

**TABLE 21**

| | Nozzles Not Sustained | Nozzles Not Sustained |
|---|---|---|
| INKS | After 2 blocks | After 140 blocks |
| Comparative Ink B | 27 | not measured |
| Ink Example PA7 | 0 | 0 |

Furthermore, as an illustration of the effect on image durability of the addition of polymer additives, the resistance of inks printed on EPPGP towards rubbing with a dry finger at 5 minutes and at 1 hour after printing are shown in Table 22.

**TABLE 22**

| INKS | Durability at 5 minutes | Durability at 1 hour |
|---|---|---|
| Comparative Ink B | Poor | Marginal |
| Ink Example PA7 | Marginal | Good |

## Claims

1. An aqueous pigment dispersion comprising a pigment and a polymeric, ionic dispersant in an aqueous vehicle, **characterized in that:**
(a) the ionic dispersant is physically adsorbed to the pigment,
(b) the polymeric ionic dispersant stably disperses the pigment in the aqueous vehicle,
(c) the average particle size of the dispersion is less than 300 nm, and
(d) when the aqueous pigment dispersion is added to 1.5 g of an aqueous NaCl salt solution of 0.16 molar salt, in an amount of
(i) one drop for pigment dispersions of more than 10 wt% solids (based upon the total weight of the dispersion),
(ii) two drops for pigment dispersions of 5-10 wt% solids (based upon the total weight of the dispersion), and
(iii) three drops for pigment dispersions of less than 5 wt% solids (based upon the total weight of the dispersion),
wherein one drop is 0.04 g,
the pigment precipitates out of the aqueous NaCl salt solution when observed 24 hours after the addition.

2. The aqueous pigment dispersion of claim 1, **characterized in that** the polymeric ionic dispersant is a copolymer of one or more hydrophilic monomers, and one or more hydrophobic monomers, the copolymer having a number average molecular weight greater than 300 and below 30,000,
wherein
hydrophilic monomers include methacrylic acid, acrylic acid, maleic acid, maleic acid monoester, itaconic acid, itaconic acid monoester, crotonic acid, crotonic acid monoester, N,N-dimethylaminoethyl methacrylate, N,N-diethylaminoethyl methacrylate, N,N-dimethylamlnoethyl acrylate, N,N-diethylaminoethyl acrylate, t-butylaminoethyl methacrylate, t-butylaminoethyl acrylate, vinyl pyrridine, N-vinyl pyrridine, 2-acrylamido-2-propane sulfonic acid,
ethoxy triethyleneglycol methacrylate, hydroxyethyl methacrylate, hydroxypropyl methacrylate, 2-ethoxyethyl methacrylate, hydroxyethyl acrylate, and hydroxypropyl acrylate,
and wherein
hydrophobic monomers include benzyl methacrylate, butyl methacrylate, methyl methacrylate, ethyl methacrylate, propyl methacrylate, hexyl methacrylate, 2-ethylhexyl methacrylate, octyl methacrylate, lauryl ethacrylate, stearyl methacrylate, phenyl methacrylate, phenoxyethyl methacrylate, methacrylonitrile, glycidyl methacrylate, p-tolyl methacrylate, sorbyl methacrylate, methyl acrylate, ethyl acrylate, propyl acrylate, butyl acrylate, hexyl acrylate, 2-ethylhexyl acrylate, octyl acrylate, lauryl acrylate, stearyl acrylate, phenyl acrylate, phenoxyethyl acrylate, acrylonitrile, glycidyl acrylate, p-tolyl acrylate, sorbyl acrylate, styrene, alphamethyl styrene, substituted styrenes, N-alkyl acrylamides, N-alkyl methacrylamides, vinyl acetate, vinyl butyrate and vinyl benzoate.

3. The aqueous pigment dispersion of claim 1, **characterized in that** the weight ratio of pigment to polymeric ionic dispersant is 0.5 to 6.

4. The aqueous pigment dispersion of claim 1, **characterized in that** the aqueous vehicle is a mixture of water and at least one water-miscible solvent.

5. An aqueous pigment dispersion of claim 1 comprising a pigment and a polymeric, ionic dispersant in an aqueous vehicle, **characterized in that**:
the polymeric ionic dispersant stably disperses the pigment in the aqueous vehicle via ionic stabilization with substantially no steric stabilization.

6. The aqueous pigment dispersion of claim 1 or 5, wherein the ionic polymeric dispersant comprises a random polymer of hydrophobic and hydrophilic monomers where the mole percent of the hydrophilic monomers of the random polymer is 1 to less than 20, and wherein the hydrophilic monomers and the hydrophobic monomers are as defined in claim 2.

7. The aqueous pigment dispersion of claim 1 or 5, wherein the ionic polymeric dispersant comprises an AB diblock polymer of hydrophilic and hydrophobic monomers where the mole percent of the hydrophilic monomers of the AB diblock polymer is 1 to less than 20, and wherein the hydrophilic monomers and the hydrophobic monomers are as defined in claim 2.

8. The aqueous pigment dispersion of claim 1 or 5, wherein the ionic polymeric dispersant comprises an ABA triblock polymer of hydrophilic and hydrophobic monomers where the mole percent of the hydrophilic monomers of the ABA triblock polymer is 2 to less than 38, and wherein the hydrophilic monomers and the hydrophobic monomers are as defined in claim 2.

9. The aqueous pigment dispersion of claim 1 or 5, wherein the ionic polymeric dispersant comprises a BAB triblock polymer of hydrophilic and hydrophobic monomers where the mole percent of the hydrophilic monomers of the BAB triblock polymer is 2 to less than 25, and wherein the hydrophilic monomers and the hydrophobic monomers are as defined in claim 2.

10. The aqueous pigment dispersion of claim 1 or 5, wherein the ionic polymeric dispersant comprises a graft or a branched polymer of hydrophilic and hydrophobic monomers where the mole percent of the hydrophilic monomers of the graft or a branched polymer is 1 to less than 20, and wherein the hydrophilic monomers and the hydrophobic monomers are as defined in claim 2.

11. An aqueous pigmented ink jet ink comprising the aqueous pigment dispersion of any one of claims 1-10.

12. The aqueous pigmented ink jet ink of claim 11, **characterized in that** the ink has from 0.1 to 10 wt% pigment based on the total weight of the ink, a weight ratio of pigment to dispersant of from 0.5 to 6, a surface tension in the range of 20 mN/m to 70 mN/m (20 dyne/cm to 70 dyne/cm) at 25°C, and a viscosity of lower than 30 mPa · s (30 cP) at 25°C.

13. An ink set comprising at least one cyan ink, at least one magenta ink and at least one yellow ink, **characterized in that** at least one of the inks is an aqueous pigmented ink jet ink as set forth in claim 11.

14. An ink set comprising at least one cyan ink, at least one magenta ink and at least one yellow ink, **characterized in that** at least one of the inks is an aqueous pigmented ink jet ink as set forth in claim 12.

15. A method for ink jet printing onto a substrate, comprising the steps of:
(a) providing an ink jet printer that is responsive to digital data signals;
(b) loading the printer with a substrate to be printed;
(c) loading the printer with an ink as set forth in claim 11; and
(d) printing onto the substrate using the ink or inkjet ink set in response to the digital data signals.

16. The method for ink jet printing onto a substrate as set forth in claim 15, wherein the printer is loaded with an ink set as set forth in claim 13.

17. method for making an aqueous pigment dispersion as set forth in any one of claims 1-10, comprising the step of mixing the pigment and the ionic polymeric dispersant in an aqueous carrier medium, then dispersing or deflocculating the pigment.

18. The method of claim 17, **characterized in that** the dispersing is accomplished in a process selected from the group consisting of 2-roll milling, media milling, and by passing the mixture through a plurality of nozzles within a liquid jet interaction chamber at a liquid pressure of at least 344.74 bar (5,000 psi).

## Patentansprüche

1. Wäßrige Pigmentdispersion, die ein Pigment und ein polymeres, ionisches Dispersionsmittel in einem wäßrigen Bindemittel aufweist, **dadurch gekennzeichnet, daß**
(a) das ionische Dispersionsmittel physikalisch an das Pigment adsorbiert wird,
(b) das polymere ionische Dispersionsmittel das Pigment stabil in dem wäßrigen Bindemittel dispergiert,
(c) die mittlere Teilchengröße der Dispersion weniger als 300 nm beträgt, und
(d) wenn die wäßrige Pigmentdispersion 1,5 g einer 0,16-molaren wäßrigen NaCl-Salzlösung in einer Menge von
(i) einem Tropfen für Pigmentdispersionen von mehr als 10 Gew.-% Feststoffanteil (bezogen auf das Gesamtgewicht der Dispersion),
(ii) zwei Tropfen für Pigmentdispersionen von 5-10 Gew.-% Feststoffanteil (bezogen auf das Gesamtgewicht der Dispersion),
(iii) drei Tropfen für Pigmentdispersionen von weniger als 5 Gew.-% Feststoffanteil (bezogen auf das Gesamtgewicht der Dispersion),
wobei ein Tropfen 0,04 g ist,
zugesetzt wird, bei Beobachtung 24 Stunden nach der Zugabe das Pigment aus der wäßrigen NaCl-Salzlösung ausfällt.

2. Wäßrige Pigmentdispersion nach Anspruch 1, **dadurch gekennzeichnet, daß** das polymere ionische Dispersionsmittel ein Copolymer eines oder mehrerer hydrophiler Monomere und eines oder mehrerer hydrophober Monomere ist, wobei das Copolymer ein zahlengemitteltes Molekulargewicht von mehr als 300 und weniger als 30000 aufweist,
wobei hydrophile Monomere Methacrylsäure, Acrylsäure, Maleinsäure, Maleinsäuremonoester, Itaconsäure, Itaconsäuremonoester, Crotonsäure, Crotonsäuremonoester, N,N-Dimethylaminoethylmethacrylat, N,N-Diethylaminoethylmethacrylat, N,N-Dimethylaminoethylacrylat, N,N-Diethylaminoethylacrylat, t-Butylaminoethylmethacrylat, t-Butylaminoethylacrylat, Vinylpyridin, N-Vinylpyridin, 2-Acrylamido-2-propansulfonsäure, Ethoxytriethylenglycolmethacrylat, Hydroxyethylmethacrylat, Hydroxypropylmethacrylat, 2-Ethoxyethylmethacrylat, Hydroxyethylacrylat und Hydroxypropylacrylat einschließen,
und wobei hydrophobe Monomere Benzylmethacrylat, Butylmethacrylat, Methylmethacrylat, Ethylmethacrylat, Propylmethacrylat, Hexylmethacrylat, 2-Ethylhexylmethacrylat, Octylmethacrylat, Laurylethacrylat, Stearylmethacrylat, Phenylmethacrylat, Phenoxyethylmethacrylat, Methacrylonitril, Glycidylmethacrylat, p-Tolylmethacrylat, Sorbylmethacrylat, Methylacrylat, Ethylacrylat, Propylacrylat, Butylacrylat, Hexylacrylat, 2-Ethylhexylacrylat, Octylacrylat, Laurylacrylat, Stearylacrylat, Phenylacrylat, Phenoxyethylacrylat, Acrylnitril, Glycidylacrylat, p-Tolylacrylat, Sorbylacrylat, Styrol, α-Methylstyrol, substituierte Styrole, N-Alkylacrylamide, N-Alkylmethacrylamide, Vinylacetat, Vinylbutyrat und Vinylbenzoat einschließen.

3. Wäßrige Pigmentdispersion nach Anspruch 1, **dadurch gekennzeichnet, daß** das Gewichtsverhältnis des Pigments zu dem polymeren ionischen Dispersionsmittel gleich 0,5 zu 6 ist.

4. Wäßrige Pigmentdispersion nach Anspruch 1, **dadurch gekennzeichnet, daß** das wäßrige Bindemittel ein Gemisch aus Wasser und mindestens einem mit Wasser mischbaren Lösungsmittel ist.

5. Wäßrige Pigmentdispersion nach Anspruch 1, die ein Pigment und ein polymeres, ionisches Dispersionsmittel in einem wäßrigen Bindemittel aufweist, **dadurch gekennzeichnet, daß** das polymere ionische Dispersionsmittel das Pigment in dem wäßrigen Bindemittel mittels ionischer Stabilisierung im wesentlichen ohne sterische Stabilisierung stabil dispergiert.

6. Wäßrige Pigmentdispersion nach Anspruch 1 oder 5, wobei das ionische polymere Dispersionsmittel ein statistisches Polymer von hydrophoben und hydrophilen Monomeren aufweist, wobei der Anteil in Mol-% der hydrophilen Monomere des statistischen Polymers 1 bis weniger als 20 beträgt, und wobei die hydrophilen Monomere und die hydrophoben Monomere der Definition in Anspruch 2 entsprechen.

7. Wäßrige Pigmentdispersion nach Anspruch 1 oder 5, wobei das ionische polymere Dispersionsmittel ein AB-Diblockpolymer von hydrophilen und hydrophoben Monomeren aufweist, wobei der Anteil in Mol% der hydrophilen Monomere des AB-Diblockpolymers 1 bis weniger als 20 beträgt, und wobei die hydrophilen Monomere und die hydrophoben Monomere der Definition in Anspruch 2 entsprechen.

8. Wäßrige Pigmentdispersion nach Anspruch 1 oder 5, wobei das ionische polymere Dispersionsmittel ein ABA-Triblockpolymer von hydrophilen und hydrophoben Monomeren aufweist, wobei der Anteil in Mol-% der hydrophilen Monomere des ABA-Triblockpolymers 2 bis weniger als 38 beträgt, und wobei die hydrophilen Monomere und die hydrophoben Monomere der Definition in Anspruch 2 entsprechen.

9. Wäßrige Pigmentdispersion nach Anspruch 1 oder 5, wobei das ionische polymere Dispersionsmittel ein BAB-Triblockpolymer von hydrophilen und hydrophoben Monomeren aufweist, wobei der Anteil in Mol-% der hydrophilen Monomere des BAB-Triblockpolymers 2 bis weniger als 25 beträgt, und wobei die hydrophilen Monomere und die hydrophoben Monomere der Definition in Anspruch 2 entsprechen.

10. Wäßrige Pigmentdispersion nach Anspruch 1 oder 5, wobei das ionische polymere Dispersionsmittel ein Pfropfpolymer oder ein verzweigtes Polymer von hydrophilen und hydrophoben Monomeren aufweist, wobei der Anteil in Mol-% der hydrophilen Monomere des Pfropfpolymers oder verzweigten Polymers 1 bis weniger als 20 beträgt, und wobei die hydrophilen Monomere und die hydrophoben Monomere der Definition in Anspruch 2 entsprechen.

11. Wäßrige pigmentierte Tintenstrahltinte, welche die wäßrige Pigmentdispersion nach einem der Ansprüche 1-10 aufweist.

12. Wäßrige pigmentierte Tintenstrahltinte nach Anspruch 11, **dadurch gekennzeichnet, daß** die Tinte 0,1 bis 10 Gew.-% Pigment, bezogen auf das Gesamtgewicht der Tinte, ein Gewichtsverhältnis des Pigments zum Dispersionsmittel von 0,5 bis 6, eine Oberflächenspannung im Bereich von 20 mN/m bis 70 mN/m (20 dyn/cm bis 70 dyn/cm) bei 25°C und eine Viskosität von weniger als 30 mPa ·s (30 cP) bei 25°C aufweist.

13. Tintensatz, der mindestens eine Cyan-Tinte, mindestens eine Magenta-Tinte und mindestens eine Yellow-Tinte aufweist, **dadurch gekennzeichnet, daß** mindestens eine der Tinten eine wäßrige pigmentierte Tintenstrahltinte nach Anspruch 11 ist.

14. Tintensatz, der mindestens eine Cyan-Tinte, mindestens eine Magenta-Tinte und mindestens eine Yellow-Tinte aufweist, **dadurch gekennzeichnet, daß** mindestens eine der Tinten eine wäßrige pigmentierte Tintenstrahltinte nach Anspruch 12 ist.

15. Verfahren für Tintenstrahldruck auf ein Substrat mit den folgenden Schritten:
(a) Bereitstellung eines Tintenstrahldruckers der auf digitale Datensignale anspricht;
(b) Laden des Druckers mit einem zu bedruckenden Substrat;
(c) Laden des Druckers mit einem Tintensatz nach Anspruch 11; und
(d) Drucken auf das Substrat unter Verwendung der Tinte oder des Tintenstrahltintensatzes als Reaktion auf die digitalen Datensignale.

16. Verfahren für Tintenstrahldruck auf ein Substrat nach Anspruch 15, wobei der Drucker mit einem Tintensatz nach Anspruch 13 geladen wird.

17. Verfahren zur Herstellung einer wäßrigen Pigmentdispersion nach einem der Ansprüche 1-10, das den Schritt zum Vermischen des Pigments und des ionischen polymeren Dispersionsmittels in einem wäßrigen Trägermedium und anschließenden Dispergieren oder Entflocken des Pigments aufweist.

18. Verfahren nach Anspruch 17, **dadurch gekennzeichnet, daß** das Dispergieren in einem Verfahren, das aus der Gruppe ausgewählt ist, die aus Mahlen in der Zweiwalzenmühle und, Mahlen mit Mahlmittel besteht, und durch Passieren des Gemischs durch mehrere Düsen innerhalb einer Flüssigkeitsstrahlwechselwirkungskammer bei einem Flüssigkeitsdruck von mindestens 344,74 bar (5000 psi) ausgeführt wird.

## Revendications

1. Dispersion aqueuse de pigment, contenant un pigment et un agent dispersant ionique polymérique dans un véhicule aqueux, **caractérisée en ce que**:
(a) l'agent dispersant ionique est physiquement adsorbé sur le pigment,
(b) l'agent dispersant ionique polymérique disperse le pigment de manière stable dans le véhicule aqueux,
(c) la taille particulaire moyenne de la dispersion est inférieure à 300 nm, et
(d) lorsque la dispersion aqueuse de pigment est ajoutée à 1,5 g d'une solution aqueuse de sel NaCl ayant une concentration en sel de 0,16 M, à raison de
(i) une goutte pour les dispersions de pigment ayant une teneur en solides supérieure à 10% en poids (rapporté au poids total de la dispersion),
(ii) deux gouttes pour les dispersions de pigment ayant une teneur en solides de 5-10% en poids (rapporté au poids total de la dispersion), et
(iii) trois gouttes pour les dispersions de pigment ayant une teneur en solides inférieure à 5% en poids (rapporté au poids total de la dispersion),
où une goutte fait 0,04 g,
le pigment précipite dans la solution aqueuse de sel NaCl lorsqu'on l'observe 24 heures après l'addition.

2. Dispersion aqueuse de pigment selon la revendication 1, **caractérisée en ce que** l'agent dispersant ionique polymrique est un copolymère d'un ou plusieurs monomères hydrophiles, et d'un ou plusieurs monomères hydrophobes, le copolymère ayant un poids moléculaire moyen en nombre supérieur à 300 et inférieur à 30 000,
où les monomères hydrophiles comprennent l'acide méthacrylique, l'acide acrylique, l'acide maléique, les monoesters d'acide maléique, l'acide itaconique, les monoesters d'acide itaconique, l'acide crotonique, les monoesters d'acide crotonique, le méthacrylate de N,N-diméthylaminoéthyle, le méthacrylate de N,N-diéthylaminoéthyle, l'acrylate de N,N-diméthylaminoéthyle, l'acrylate de N,N-diéthylaminoéthyle, le méthacrylate de t-butylaminoéthyle, l'acrylate de t-butylaminoéthyle, la vinylpyridine, la N-vinylpyridine, l'acide 2-acrylamido-2-propanesulfonique, le méthacrylate d'éthoxytriéthylèneglycol, le méthacrylate d'hydroxyéthyle, le méthacrylate d'hydroxypropyle, le méthacrylate de 2-éthoxyéthyle, l'acrylate d'hydroxyéthyle, et l'acrylate d'hydroxypropyle,
et où les monomères hydrophobes comprennent le méthacrylate de benzyle, le méthacrylate de butyle, le méthacrylate de méthyle, le méthacrylate d'éthyle, le méthacrylate de propyle, le méthacrylate d'hexyle, le méthacrylate de 2-éthylhexyle, le méthacrylate d'octyle, l'éthacrylate de lauryle, le méthacrylate de stéaryle, le méthacrylate de phényle, le méthacrylate de phénoxyéthyle, le méthacrylonitrile, le méthacrylate de glycidyle, le méthacrylate de p-tolyle, le méthacrylate de sorbyle, l'acrylate de méthyle, l'acrylate d'éthyle, l'acrylate de propyle, l'acrylate de butyle, l'acrylate d'hexyle, l'acrylate de 2-éthylhexyle, l'acrylate d'octyle, l'acrylate de lauryle, l'acrylate de stéaryle, l'acrylate de phényle, l'acrylate de phénoxyéthyle, l'acrylonitrile, l'acrylate de glycidyle, l'acrylate de p-tolyle, l'acrylate de sorbyle, le styrène, l'alpha-méthylstyrène, les styrènes substitués, les N-alkylacrylamides, les N-alkylméthacrylamides, l'acétate de vinyle, le butyrate de vinyle et le benzoate de vinyle.

3. Dispersion aqueuse de pigment selon la revendication 1, **caractérisée en ce que** le rapport pondéral du pigment à l'agent dispersant ionique polymérique est de 0,5 à 6.

4. Dispersion aqueuse de pigment selon la revendication 1, **caractérisée en ce que** le véhicule aqueux est un mélange d'eau et d'au moins un solvant miscible à l'eau.

5. Dispersion aqueuse de pigment selon la revendication 1 contenant un pigment et un agent dispersant ionique polymérique dans un véhicule aqueux, **caractérisée en ce que** l'agent dispersant ionique polymérique disperse le pigment de manière stable dans le véhicule aqueux par stabilisation ionique et pratiquement pas par stabilisation stérique.

6. Dispersion aqueuse de pigment selon la revendication 1 ou 5, dans laquelle l'agent dispersant ionique polymérique comprend un polymère aléatoire de monomères hydrophobes et hydrophiles où le pourcentage molaire des monomères hydrophiles du polymère aléatoire est compris entre 1 et moins de 20, et dans laquelle les monomères hydrophiles et les monomères hydrophobes sont tels que définis dans la revendication 2.

7. Dispersion aqueuse de pigment selon la revendication 1 ou 5, dans laquelle l'agent dispersant ionique polymérique comprend un polymère dibloc AB de monomères hydrophiles et hydrophobes où le pourcentage molaire des monomères hydrophiles du polymère dibloc AB est compris entre 1 et moins de 20, et dans laquelle les monomères hydrophiles et les monomères hydrophobes sont tels que définis dans la revendication 2.

8. Dispersion aqueuse de pigment selon la revendication 1 ou 5, dans laquelle l'agent dispersant ionique polymérique comprend un polymère tribloc ABA de monomères hydrophiles et hydrophobes où le pourcentage molaire des monomères hydrophiles du polymère tribloc ABA est compris entre 2 et moins de 38, et dans laquelle les monomères hydrophiles et les monomères hydrophobes sont tels que définis dans la revendication 2.

9. Dispersion aqueuse de pigment selon la revendication 1 ou 5, dans laquelle l'agent dispersant ionique polymérique comprend un polymère tribloc BAB de monomères hydrophiles et hydrophobes où le pourcentage molaire des monomères hydrophiles du polymère tribloc BAB est compris entre 2 et moins de 25, et dans laquelle les monomères hydrophiles et les monomères hydrophobes sont tels que définis dans la revendication 2.

10. Dispersion aqueuse de pigment selon la revendication 1 ou 5, dans laquelle l'agent dispersant ionique polymérique comprend un polymère greffé ou ramifié de monomères hydrophiles et hydrophobes où le pourcentage molaire des monomères hydrophiles du polymère greffé ou ramifié est compris entre 1 et moins de 20, et dans laquelle les monomères hydrophiles et les monomères hydrophobes sont tels que définis dans la revendication 2.

11. Encre pigmentée aqueuse pour impression par jet d'encre comprenant la dispersion aqueuse de pigment selon l'une quelconque des revendications 1-10.

12. Encre pigmentée aqueuse pour impression par jet d'encre selon la revendication 11, **caractérisée en ce que** l'encre possède 0,1 à 10% en poids de pigment rapporté au poids total de l'encre, un rapport pondéral du pigment à l'agent dispersant de 0,5 à 6, une tension superficielle comprise entre 20 mN/m et 70 mN/m (entre 20 dynes/cm et 70 dynes/cm) à 25°C, et une viscosité inférieure à 30 mPa•s (30 cP) à 25°C.

13. Jeu d'encres comprenant au moins une encre cyan, au moins une encre magenta et au moins une encre jaune, **caractérisé en ce qu'**au moins une des encres est une encre pigmentée aqueuse pour impression par jet d'encre selon la revendication 11.

14. Jeu d'encres comprenant au moins une encre cyan, au moins une encre magenta et au moins une encre jaune, **caractérisé en ce qu'**au moins une des encres est une encre pigmentée aqueuse pour impression par jet d'encre selon la revendication 12.

15. Procédé d'impression par jet d'encre sur un substrat, comprenant les étapes consistant à:
(a) se procurer une imprimante à jet d'encre qui réagit aux signaux de données numériques;
(b) charger dans l'imprimante un substrat devant être imprimé;
(c) charger dans l'imprimante une encre selon la revendication 11; et
(d) réaliser une impression sur le substrat à l'aide de l'encre ou du jet d'encres pour impression par jet d'encre en réponse aux signaux de données numériques.

16. Procédé d'impression par jet d'encre sur un substrat selon la revendication 15, dans lequel on charge dans l'imprimante un jeu d'encres selon la revendication 13.

17. Procédé de préparation d'une dispersion aqueuse de pigment selon l'une quelconque des revendications 1-10, comprenant l'étape consistant à mélanger le pigment et l'agent dispersant ionique polymérique dans un milieu liant aqueux, puis à disperser ou déflocculer le pigment.

18. Procédé selon la revendication 17, **caractérisé en ce que** l'opération de dispersion est effectuée par un procédé choisi dans le groupe constitué du broyage entre deux cylindres, du broyage avec usage de médias, et en faisant passer le mélange à travers une pluralité de buses à l'intérieur d'une chambre d'interaction à jets de liquide à une pression du liquide d'au moins 344,74 bars (5000 psi).
